(19) **Europäisches Patentamt**
**European Patent Office**
**Office européen des brevets**

(11) **EP 2 851 660 B1**

(12) **EUROPEAN PATENT SPECIFICATION**

(45) Date of publication and mention
of the grant of the patent:
**05.04.2017 Bulletin 2017/14**

(51) Int Cl.:
***G01G 21/00*** *(2006.01)*

(21) Application number: **14185177.4**

(22) Date of filing: **17.09.2014**

(54) **Weighing apparatus, weighing system, weighing method, and program**

Wiegevorrichtung, Wiegesystem, Wiegeverfahren und Programm

Appareil de pesage, système de pesage, procédé de pesage et programme

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2013 JP 2013192890**

(43) Date of publication of application:
**25.03.2015 Bulletin 2015/13**

(73) Proprietor: **Tanita Corporation**
**Tokyo (JP)**

(72) Inventors:
• **Sakai, Yoshio**
**Itabashi-ku, Tokyo (JP)**
• **Inoue, Kazuma**
**Itabashi-ku, Tokyo (JP)**
• **Kumekawa, Atsuo**
**Itabashi-ku, Tokyo (JP)**

(74) Representative: **Grünecker Patent- und Rechtsanwälte**
**PartG mbB**
**Leopoldstraße 4**
**80802 München (DE)**

(56) References cited:
EP-A1- 1 985 977          WO-A1-2004/099737
DE-U1-202009 014 292      JP-A- 2013 002 941
US-A- 5 561 274           US-A1- 2011 196 617

**Description**

BACKGROUND

Field of the Invention

The present invention relates to a weighing apparatus, a weighing system, a weighing method, a program, and a recording medium according to claims 1, 12 and 15 respectively.
In particular, the present invention relates to a weighing apparatus, a weighing system, a weighing method for weighing a mass of an object, a program that causes a computer to function as the weighing apparatus, a program that causes a first computer to function as the weighing apparatus and that causes a second computer to function as a portable information terminal, and a recording medium that records the programs.

Background

In weighing apparatus such as scales, an error may occur in some cases due to noise associated with vibration in the measurement environment or the like. In scales, there has been employed a measure in which noise is removed by performing a filtering process on data obtained from a load cell.
Incidentally, vibration in a measurement environment varies from high frequency to low frequency. In particular, low frequency noise may not be removed in some cases, depending on the filtering process. Moreover, an excessive filtering process may deteriorate measurement responsiveness in some cases.
As techniques related to this type of background, various techniques are known (for example, refer to Japanese Patent Application, Publication No. JP2013-2941A).
For example, Japanese Patent Application, Publication No. JP2013-2941A discloses a weighing system which is capable of stabilizing vibration compensation of a weighing sensor, using an accelerometer, which is a sensor different from the weighing sensor. To describe more specifically, this weighing system is provided with a weighing sensor. Moreover, this weighing system is provided with a vibration sensor for detecting an influence of disturbance vibration picked up naturally by the weighing sensor. Furthermore, this weighing system is provided with a first A/D (analog/digital) conversion unit that converts an analog output value from the weighing sensor into a digital output value. Moreover, this weighing system is provided with a second A/D conversion unit that converts an analog output value from the vibration sensor into a digital output value. Furthermore, this weighing system is provided with a correction calculation unit that corrects a digital output value from the second A/D conversion unit so that the digital output value from the second A/D conversion unit conforms to the sensitivity characteristic of a digital output value of the first A/D conversion unit. Moreover, this weighing system is provided with a combining unit that combines the corrected digital output value from the correction calculation unit and the digital output value of the first A/D conversion unit to mitigate influence of disturbance vibration. The digital output value from the second A/D conversion unit undergoes up-sampling before the digital output value from the second A/D conversion unit is corrected by the correction calculation unit. With this weighing system, in this manner, vibration compensation is stabilized, and in addition, increase in installation space and cost are suppressed, compared to a method that uses, as a vibration compensation sensor, the same sensor as the weighing sensor that requires compensation.
Document EP1985977 A1 and document DE202009014292 U1 both disclose weighing apparatuses which use a calculation unit to calculate correction coefficients using an acceleration sensor.

SUMMARY

As described above, the weighing system disclosed in Japanese Patent Application, Publication No. JP2013-2941A is a system that subtracts an output value of the vibration sensor from an output value of the weighing sensor to remove noise, and is extremely effective. This type of weighing system uses the amount of change in the weighing sensor output with respect to the amount of change in the vibration sensor output, as a correction coefficient for correcting the output of the weighing sensor.
However, this type of correction coefficient is calculated, using, for example, a specialized apparatus such as one that applies a standard reference vibration to the scale.
According to an aspect of the present invention, there is a weighing apparatus for weighing a mass of an object, the apparatus comprising: a main body; a load receiving device provided at the main body to receive a load; a load detection device provided to detect a load acting on the load receiving device; an acting force detection device provided to detect a force that is acting on the main body and that differs from the load acting on the load receiving device; and a data processing device configured to data-process an output of the load detection device as a weighed value in a mass unit. The data processing device has: a load output acquisition unit configured to acquire an output of the load detection device; a force output acquisition unit configured to acquire an output of the acting force detection device; and a correction coefficient calculation unit configured to calculate, as a correction coefficient for correcting an output of the load detection device, a change amount of an output of the load output acquisition unit with respect to a change amount of an output of the acting force detection device based on (i) outputs of the load detection device and the acting force detection device acquired respectively by the load output acquisition unit and the force output acquisition unit, for when the main body with zero load applied thereto is placed in a first attitude and (ii) outputs of the load detection device and the acting force detection device acquired respectively by the load output acquisition unit and the force output acquisition unit, for when the main body with zero load applied thereto is placed in a second attitude, which differs from the first attitude.

The data processing device may further have: a frequency determination unit that, in a case where a change occurs in an output of the acting force detection device at the time of weighing, determines whether or not a frequency of the change is smaller than a threshold value; and a change detected time weighed value calculation unit that, in a case where the frequency determination unit determines the frequency as being smaller than the threshold value, treats a value that is calculated by subtracting, from an output of the load detection device, a value obtained by multiplying an output of the acting force detection device by a correction coefficient calculated by the correction coefficient calculation unit, as a weighed value.

The data processing device may further have: an output difference determination unit that determines whether or not an output difference between an output of the acting force detection device when a display is automatically set to zero without intervention of an operator, and an output of the acting force detection device at a time of weighing, is within an acceptable value; and an output difference detected time weighed value calculation unit that, in a case where the output difference determination unit determines the output difference as not being within the acceptable value, treats a value that is calculated by subtracting from an output of the load detection device, a value obtained by multiplying the output difference by a correction coefficient calculated by the correction coefficient calculation unit, as a weighed value.

The data processing device may further have: a span coefficient calculation unit that treats as a span coefficient of the load detection device after shipment, a value that is calculated by multiplying a value obtained by dividing a correction coefficient calculated after shipment by the correction coefficient calculation unit by a correction coefficient calculated before shipment by the correction coefficient calculation unit, by a span coefficient of the load detection unit obtained before shipment.

In the weighing apparatus, at least one of (a) the acting force detection device and (b) at least a part of the data processing device (the load output acquisition unit, the force output acquisition unit, and the correction coefficient calculation unit) may be provided at another body that is different from the main body.

In the weighing apparatus, the acting force detection device may be provided at the another body, the another body may be attachably and detachably provided with respect to the main body, and the acting force detection device detects, while the another body may be attached on the main body, the force that is acting on the main body and that differs from the load acting on the load receiving device.

In the weighing apparatus, the another body may be a portable information terminal.

According to another aspect of the present invention, there is a weighing system comprising: a weighing apparatus configured to measure a mass of an object; a portable information terminal; and a data processing section configured to process data for the measurement, wherein the weighing apparatus comprises: a load receiving unit, and a load detection device arranged to detect a load acting on the load receiving unit, the portable information terminal comprises: an acting force detection device arranged to detect a force that is acting on the weighing apparatus, the data processing section comprises: a load output acquisition unit provided at the weighing apparatus and configured to acquire an output of the load detection device; a force output acquisition unit provided at the portable information terminal and configured to acquire an output of the acting force detection device; and a correction coefficient calculation unit provided at the weighing apparatus or at the portable information terminal and configured to calculate a correction coefficient for correcting an output of the load detection device.

In the weighing system, the system may be arranged such that the portable information terminal is attachably and detachably provided with respect to the weighing apparatus, and the acting force detection device may be arranged to detect, while the portable information terminal is attached on the weighing apparatus, the force that is acting on the weighing apparatus and that differs from the load acting on the load receiving unit.

According to further another aspect of the present invention, there is a weighing system for weighing a mass of an object, the system including: a weighing apparatus that is provided with a load receiving device provided for receiving a load, and a load detection device provided for detecting a load acting on the load receiving device; and a portable information terminal that is attachably and detachably provided on the weighing apparatus, and that is provided with an acting force detection device provided for detecting a force that is acting on the weighing apparatus and that differs from a load acting on the load receiving device. The weighing apparatus has a load output acquisition unit configured to acquire an output of the load detection device; the portable information terminal has a force output acquisition unit configured to acquire an output of the acting force detection device, and a force data transmission unit configured to transmit to the weighing apparatus, force data indicating an output acquired by the force output acquisition unit; and the weighing apparatus further has a force data reception unit configured to receive the force data transmitted from the portable information terminal, and a correction coefficient calculation unit configured to calculate, as a correction coefficient for correcting an output of the load detection device, a change amount of an output of the load detection device with respect to a change amount of an output of the acting force detection device based on (i) an output of the load detection device that is acquired by the load output acquisition unit and an output of the acting force detection device that is shown by force data received by the force data reception unit, for when the portable information terminal is attached on the weighing apparatus with zero load applied thereto and the weighing apparatus is placed in a first attitude, (ii) an output of the load detection device that is acquired by the load output acquisition unit and an output of the acting force detection device that is shown by force data received by the force data reception unit, for when the portable information terminal is attached on the weighing apparatus with zero load applied thereto and the weighing apparatus is placed in a second attitude, which differs from the first attitude.

According to further another aspect of the present invention, there is a weighing system for weighing a mass of an object, the system including: a weighing apparatus that is provided with a load receiving device provided for receiving a load, and a load detection device provided for detecting a load acting on the load receiving device; and a portable information terminal that is attachably and detachably provided on the weighing apparatus, and that is provided with an acting force detection device provided for detecting a force that is acting on the weighing apparatus and that differs from a load acting on the load receiving device. The weighing apparatus has a load output acquisition unit that acquires an output of the load detection device, and a load data transmission unit that transmits to the portable information terminal, load data indicating the output acquired by the load output acquisition unit; and the portable information terminal has a force output acquisition unit that acquires an output of the acting force detection device, a load data reception unit that receives the load data transmitted from the weighing apparatus; and a correction coefficient calculation unit that calculates, as a correction coefficient for correcting an output of the load detection device, a change amount of an output of the load detection device with respect to a change amount of an output of the acting force detection device based on (i) an output of the load detection device that is shown by the load data received by the load data reception unit and an output of the acting force detection device that is acquired by the force output acquisition unit, for when the portable information terminal is attached on the weighing apparatus with zero load applied thereto and the weighing apparatus is placed in a first attitude and (ii) an output of the load detection device that is shown by the load data received by the load data reception unit and an output of the acting force detection device that is acquired by the force output acquisition unit, for when the portable information terminal is attached on the weighing apparatus with zero load applied thereto and the weighing apparatus is placed in a second attitude, which differs from the first attitude.

According to further another aspect of the present invention, there is a weighing method for weighing a mass of an object, the method including: (a) acquiring an output of a load detection device that is provided at a body of a weighing apparatus for detecting a load acting on a load receiving device of the body; (b) acquiring an output of an acting force detection device that is provided for detecting a force that is acting on the body and that differs from a load that is acting on the load receiving device; and (c) calculating, as a correction coefficient for correcting an output of the load detection device, a change amount of an output of the load detection device with respect to a change amount of an output of the acting force detection device based on (i) outputs of the load detection device and the acting force detection device acquired respectively in the step (a) and the step (b), for when the body with zero load applied thereto is placed in a first attitude and (ii) outputs of the load detection device and the acting force detection device acquired respectively in the step (a) and the step (b), for when the body with zero load applied thereto is placed in a second attitude, which differs from the first attitude.

According to further another aspect of the present invention, there is a program that causes a computer to function as a weighing apparatus that weighs a mass of an object, the program causing the computer to function as: a load output acquisition unit that acquires an output of a load detection device that is provided at a body of the weighing apparatus for detecting a load acting on a load receiving device of the body; a force output acquisition unit that acquires an output of an acting force detection device that is provided for detecting a force that is acting on the body and that differs from a load that is acting on the load receiving device; and a correction coefficient calculation unit that calculates, as a correction coefficient for correcting an output of the load detection device, a change amount of an output of the load detection device with respect to a change amount of an output of the acting force detection device based on (i) outputs of the load detection device and the acting force detection device acquired respectively by the load output acquisition unit and the force output acquisition unit, for when the body with zero load applied thereto is placed in a first attitude and (ii) outputs of the load detection device and the acting force detection device acquired respectively by the load output acquisition unit and the force output acquisition unit, for when the body with zero load applied thereto is placed in a second attitude, which differs from the first attitude.

According to further another aspect of the present invention, there is a recording medium that records a program that causes a computer to function as a weighing apparatus that weighs a mass of an object, the recording medium recording a program that causes the computer to function as: a load output acquisition unit that acquires an output of a load detection device that is provided at a body of the weighing apparatus for detecting a load acting on a load receiving device of the body; a force output acquisition unit that acquires an output of an acting force detection device that is provided for detecting a force that is acting on the body and that differs from a load that is acting on the load receiving device; and a correction coefficient calculation unit that calculates, as a correction coefficient for correcting an output of the load detection device, a change amount of an output of the load detection device with respect to the change amount of an output of the acting force detection device based on (i) outputs of the load detection device and the acting force detection device acquired respectively by the load output acquisition unit and the force output acquisition unit, for when the body with zero load applied thereto is placed in a first attitude and (ii) outputs of the load detection device and the acting force detection device acquired respectively by the load output acquisition unit and the force output acquisition unit, for when the body with zero load applied thereto is placed in a second attitude, which differs from the first attitude.

According to further another aspect of the present invention, there is a weighing method for weighing a mass of an object, the method including: (a) acquiring an output of a load detection device by means of a weighing apparatus that is provided with a load receiving device provided for receiving a load, and the load detection device provided for detecting a load acting on the load receiving device; (b) acquiring an output of an acting force detection device by means of a portable information terminal that is attachably and detachably provided on the weighing apparatus, and that is provided with an acting force detection device provided for detecting a force that is acting on the weighing apparatus and that differs from a load acting on the load receiving device; (c) transmitting force data showing the output acquired in the step (b), to the weighing apparatus by means of the portable information terminal; (d) receiving the force data transmitted from the portable information terminal, by means of the weighing apparatus; and (e) by means of the weighing apparatus, calculating, as a correction coefficient for correcting an output of the load detection device, a change amount of an output of the load detection device with respect to a change amount of an output of the acting force detection device based on (i) an output of the load detection device that is acquired in the step (a) and an output of the acting force detection device that is shown by the force data received in the step (d), for when the portable information terminal is attached on the weighing apparatus with zero load applied thereto and the weighing apparatus is placed in a first attitude and (ii) an output of the load detection device that is acquired in the step (a) and an output of the acting force detection device that is shown by the force data received in the step (d), for when the portable information terminal is attached on the weighing apparatus with zero load applied thereto and the weighing apparatus is placed in a second attitude, which differs from the first attitude.

According to further another aspect of the present invention, there is a program that causes a first computer to function as a weighing apparatus in a weighing system for weighing a mass of an object, that is provided with a load receiving device provided for receiving a load, and a load detection device provided for detecting a load acting on the load receiving device, and that causes a second computer to function as a portable information terminal that is attachably and detachably provided on the weighing apparatus, and that is provided with an acting force detection device provided for detecting a force that is acting on the weighing apparatus and that differs from a load acting on the load receiving device. The program causes: the first computer to function as a load output acquisition unit that acquires an output of the load detection device; the second computer to function as a force output acquisition unit that acquires an output of the acting force detection device, and a force data transmission unit that transmits to the weighing apparatus, force data indicating an output acquired by the force output acquisition unit; and the first computer to further function as a force data reception unit that receives the force data transmitted from the portable information terminal, and a correction coefficient calculation unit that calculates, as a correction coefficient for correcting an output of the load detection device, a change amount of an output of the load detection device with respect to a change amount of an output of the acting force detection device based on (i) an output of the load detection device that is acquired by the load output acquisition unit and an output of the acting force detection device that is shown by the force data received by the force data reception unit, for when the portable information terminal is attached on the weighing apparatus with zero load applied thereto and the weighing apparatus is placed in a first attitude and (ii) an output of the load detection device that is acquired by the load output acquisition unit and an output of the acting force detection device that is shown by the force data received by the force data reception unit, for when the portable information terminal is attached on the weighing apparatus with zero load applied thereto and the weighing apparatus is placed in a second attitude, which differs from the first attitude.

According to further another aspect of the present invention, there is a recording medium that records a program that causes a first computer to function as a weighing apparatus in a weighing system for weighing a mass of an object, that is provided with a load receiving device provided for receiving a load, and a load detection device provided for detecting a load acting on the load receiving device, and that causes a second computer to function as a portable information terminal that is attachably and detachably provided on the weighing apparatus, and that is provided with an acting force detection device provided for detecting a force that is acting on the weighing apparatus and that differs from a load acting on the load receiving device. The recording medium records a program that causes: the first computer to further function as a load output acquisition unit that acquires an output of the load detection device; the second computer to function as a force output acquisition unit that acquires an output of the acting force detection device, and a force data transmission unit that transmits to the weighing apparatus, force data indicating an output acquired by the force output acquisition unit; and the first computer to further function as a force data reception unit that receives the force data transmitted from the portable information terminal, and a correction coefficient calculation unit that calculates, as a correction coefficient for correcting an output of the load detection device, a change amount of an output of the load detection device with respect to a change amount of an output of the acting force detection device based on (i) an output of the load detection device that is acquired by the load output acquisition unit and an output of the acting force detection device that is shown by the force data received by the force data reception unit, for when the portable information terminal is attached on the weighing apparatus with zero load applied thereto and the weighing apparatus is placed in a first attitude and (ii) an output of the load detection device that is acquired by the load output acquisition unit and an output of the acting force detection device that is shown by the force data received by the force data reception unit, for when the portable information terminal is attached on the weighing apparatus with zero load applied thereto and the weighing apparatus is placed in a second attitude, which differs from the first attitude.

According to further another aspect of the present invention, there is a weighing method for weighing a mass of an object, the method including: (a) acquiring an output of a load detection device by means of a weighing apparatus that is provided with a load receiving device provided for receiving a load, and the load detection device provided for detecting a load acting on the load receiving device; (b) by means of the weighing apparatus, transmitting load data indicating the output acquired in the step (a) to a portable information terminal that is attachably and detachably provided on the weighing apparatus, and that is provided with an acting force detection device provided for detecting a force that is acting on the weighing apparatus, and that differs from a load acting on the load receiving device; (c) acquiring an output of the acting force detection device by means of the portable information terminal; (d) receiving the load data transmitted from the weighing apparatus, by means of the portable information terminal; and (e) by means of the portable information terminal, calculating, as a correction coefficient for correcting an output of the load detection device, a change amount of an output of the load detection device with respect to a change amount of an output of the acting force detection device based on (i) an output of the load detection device that is shown by the load data received in the step (d) and an output of the acting force detection device that is acquired in the step (c), for when the portable information terminal is attached on the weighing apparatus with zero load applied thereto and the weighing apparatus is placed in a first attitude and (ii) an output of the load detection device that is shown by the load data received in the step (d) and an output of the acting force detection device that is acquired in the step (c), for when the portable information terminal is attached on the weighing apparatus with zero load applied thereto and the weighing apparatus is placed in a second attitude, which differs from the first attitude.

According to further another aspect of the present invention, there is a program that causes a first computer to function as a weighing apparatus in a weighing system for weighing a mass of an object, that is provided with a load receiving device provided for receiving a load, and a load detection device provided for detecting a load acting on the load receiving device, and that causes a second computer to function as a portable information terminal that is attachably and detachably provided on the weighing apparatus, and that is provided with an acting force detection device provided for detecting a force that is acting on the weighing apparatus and that differs from a load acting on the load receiving device. The program causes: the first computer to further function as a load output acquisition unit that acquires an output of the load detection device, and a load data transmission unit that transmits to the portable information terminal, load data indicating the output acquired by the load output acquisition unit; and the second computer to function as a force output acquisition unit that acquires an output of the acting force detection device, a load data reception unit that receives the load data transmitted from the weighing apparatus, and a correction coefficient calculation unit that calculates, as a correction coefficient for correcting an output of the load detection device, a change amount of an output of the load detection device with respect to a change amount of an output of the acting force detection device based on (i) an output of the load detection device that is shown by the load data received by the load data reception unit and an output of the acting force detection device that is acquired by the force output acquisition unit, for when the portable information terminal is attached on the weighing apparatus with zero load applied thereto and the weighing apparatus is placed in a first attitude and (ii) an output of the load detection device that is shown by the load data received by the load data reception unit and an output of the acting force detection device that is acquired by the force output acquisition unit, for when the portable information terminal is attached on the weighing apparatus with zero load applied thereto and the weighing apparatus is placed in a second attitude, which differs from the first attitude.

According to further another aspect of the present invention, there is a recording medium that records a program that causes a first computer to function as a weighing apparatus in a weighing system for weighing a mass of an object, that is provided with a load receiving device provided for receiving a load, and a load detection device provided for detecting a load acting on the load receiving device, and that causes a second computer to function as a portable information terminal that is attachably and detachably provided on the weighing apparatus, and that is provided with an acting force detection device provided for detecting a force that is acting on the weighing apparatus and that differs from a load acting on the load receiving device. The recording medium records a program that causes: the first computer to further function as a load output acquisition unit that acquires an output of the load detection device, and a load data transmission unit that transmits to the portable information terminal, load data indicating the output acquired by the load output acquisition unit; and the second computer to function as a force output acquisition unit that acquires an output of the acting force detection device, a load data reception unit that receives load data transmitted from the weighing apparatus, and a correction coefficient calculation unit that calculates, as a correction coefficient for correcting an output of the load detection device, a change amount of an output of the load detection device with respect to a change amount of an output of the acting force detection device based on (i) an output of the load detection device that is shown by the load data received by the load data reception unit and an output of the acting force detection device that is acquired by the force output acquisition unit, for when the portable information terminal is attached on the weighing apparatus with zero load applied thereto and the weighing apparatus is placed in a first attitude and (ii) an output of the load detection device that is shown by the load data received by the load data reception unit and an output of the acting force detection device that is acquired by the force output acquisition unit, for when the portable information terminal is attached on the weighing apparatus with zero load applied thereto and the weighing apparatus is placed in a second attitude, which differs from the first attitude.

The above summary of the invention does not described all of the characteristics required for the present invention. Moreover, subcombinations of the group of these characteristics may also be the invention.

As can be understood clearly from the above description, according to the present invention, it is possible, for example, to calculate the change amount of the output of the weighing sensor with respect to the change amount of the output of the vibration sensor as a correction coefficient for correcting the output of the weighing sensor, without using a specialized apparatus such as one that applies a standard reference vibration to the scale.

BRIEF DESCRIPTION OF THE DRAWINGS

FIG. 1 is a diagram showing an example of a structure of a scale according to an embodiment.
FIG. 2 is a diagram showing an example of a hardware configuration of the scale.
FIG. 3 is a diagram showing an example of a block configuration of a processor according to a first embodiment.
FIG. 4 is a diagram showing an example of a flow chart showing the processor according to an embodiment.
FIG. 5 is a diagram showing an example of a flow chart showing the processor according to the first embodiment.
FIG. 6 is a diagram showing an example of a block configuration of the processor according to a second embodiment.
FIG. 7 is a diagram showing an example of a flow chart showing the processor according to the second embodiment.
FIG. 8 is a diagram showing an example of a flow chart showing the processor according to the second embodiment.
FIG. 9 is a diagram showing an example of a block configuration of the processor according to a third embodiment.
FIG. 10 is a diagram showing an example of a flow chart showing the processor according to the third embodiment.
FIG. 11 is a diagram showing an example of a configuration of a weighing system according to an embodiment.
FIG. 12 is a diagram showing an example of a configuration of a weighing system according to an embodiment.
FIG. 13 is a diagram showing an example of a hardware configuration of the scale, which is a constituent of the weighing system.
FIG. 14 is a diagram showing an example of a hardware configuration of a smartphone.
FIG. 15 is a diagram showing an example of a block configuration of a processor according to a fourth embodiment.
FIG. 16 is a diagram showing an example of a block configuration of a processor according to the fourth embodiment.
FIG. 17 is a diagram showing an example of an operation sequence of the scale and the smartphone according to the fourth embodiment.
FIG. 18 is a diagram showing an example of a block configuration of a processor according to a fifth embodiment.
FIG. 19 is a diagram showing an example of a block configuration of a processor according to the fifth embodiment.
FIG. 20 is a diagram showing an example of an operation sequence of a scale and a smartphone according to the fifth embodiment.

BRIEF DESCRIPTION OF THE REFERENCE NUMERALS

100 SCALE
101 ATTACHMENT UNIT
110 PROCESSOR
111 LOAD OUTPUT ACQUISITION UNIT
112 FORCE OUTPUT ACQUISITION UNIT
113 CORRECTION COEFFICIENT CALCULATION UNIT
114 CORRECTION COEFFICIENT INFORMATION STORAGE UNIT
115 FREQUENCY DETERMINATION UNIT
116 NORMAL TIME WEIGHED VALUE CALCULATION UNIT
117 CHANGE DETECTED TIME WEIGHED VALUE CALCULATION UNIT
118 WEIGHED VALUE OUTPUT UNIT
119 FORCE INFORMATION STORAGE UNIT
120 OUTPUT DIFFERENCE DETERMINATION UNIT
121 OUTPUT DIFFERENCE DETECTED TIME WEIGHED VALUE CALCULATION UNIT
122 SPAN COEFFICIENT INFORMATION STORAGE UNIT
123 SPAN COEFFICIENT CALCULATION UNIT
124 FORCE DATA RECEPTION UNIT
125 WEIGHED VALUE DATA TRANSMISSION UNIT
126 LOAD DATA TRANSMISSION UNIT
130 LOAD RECEIVING UNIT
140 LOAD CELL
150 ADC
160 ACCELEROMETER
170 ADC
180 DIGITAL DISPLAY
190 WIRELESS COMMUNICATION SUBSYSTEM
200 SMARTPHONE
210 PROCESSOR
211 FORCE OUTPUT ACQUISITION UNIT
212 FORCE DATA TRANSMISSION UNIT
213 WEIGHED VALUE DATA RECEPTION UNIT
214 WEIGHED VALUE OUTPUT UNIT
215 LOAD DATA RECEPTION UNIT
216 CORRECTION COEFFICIENT CALCULATION UNIT
217 CORRECTION COEFFICIENT INFORMATION STORAGE UNIT
218 FREQUENCY DETERMINATION UNIT
219 NORMAL TIME WEIGHED VALUE CALCULATION UNIT
220 CHANGE DETECTED TIME WEIGHED VALUE CALCULATION UNIT
230 MEMORY INTERFACE
240 PERIPHERAL INTERFACE
250 ANGULAR VELOCITY SENSOR
260 MAGNETOMETER SENSOR
270 POSITION PROCESSOR
280 ACCELEROMETER
290 CAMERA SUBSYSTEM
300 OPTICAL SENSOR

310 WIRELESS COMMUNICATION SUBSYSTEM
320 AUDIO SUBSYSTEM
330 SPEAKER
340 MICROPHONE
350 I/O SUBSYSTEM
351 TOUCH SCREEN CONTROLLER
352 OTHER INPUT CONTROLLER
360 TOUCH SCREEN
370 OTHER INPUT/CONTROL DEVICE
380 MEMORY

DESCRIPTION OF THE EMBODIMENTS

Hereunder, the present invention is described though embodiments of the invention. However, the following embodiments do not limit the invention of the claims. Furthermore, not all of the combinations of the characteristics described in the embodiments are essential to the problem-solving means of the invention.

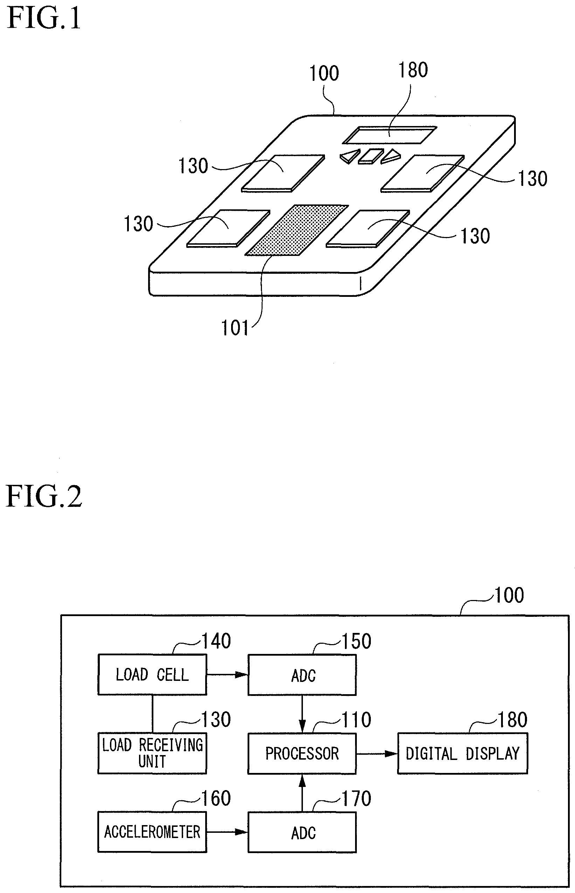

FIG. 1 shows an example of a structure of a scale 100 according to an embodiment. FIG. 2 shows an example of a hardware configuration of the scale 100. The scale 100 is a weighing scale used for weighing the mass of an object (for measuring the mass of an object). The scale 100 may be taken as an example of the "weighing apparatus" or "main body/body" in the present invention.

The scale 100 is provided with a processor 110, a load receiving unit 130, a load cell 140, an ADC (analog-digital converter) 150, an accelerometer 160, an ADC 170, and a digital display 180. In the following description, the function and operation of each constituent are described in detail. The processor 110 may be taken as an example of a "data processing device/data processing section" in the present invention. Moreover, the load receiving unit 130 may be taken as an example of a "load receiving device" in the present invention. Furthermore, the load cell 140 may be taken as an example of a "load detection device" in the present invention. Also, the accelerometer 160 may be taken as an example of an "acting force detection device" in the present invention. The accelerometer 160 can include, for example, an attitude sensor, a G-force sensor, a gravity gradiometry, or the like. Alternatively, another sensor (for example, at least one another load cell, which is different from the load cell 140) can be used as the "acting force detection device."

The load receiving unit 130 is a portion that is provided for receiving a load. For example, the load receiving unit 130 is provided on the upper surface of the scale (body) 100.

The load cell 140 is a device that converts a load signal detected by a strainmeter (strain gauge) attached on a strain body into a mass to thereby measure a mass. For example, the load cell 140 is provided so that, when the load receiving unit 130 receives a load, a strain body becomes deformed (strained, distorted) due to the load. Moreover, the load cell 140 is electrically connected to the ADC 150. Upon measuring a mass, the load cell 140 outputs an analog signal that indicates the measurement result to the ADC 150. A mass measurement may be taken as an example of "load detection" in the present invention.

The ADC 150 is a circuit that converts an analog signal into a digital signal. For example, the ADC 150 is electrically connected to the load cell 140 and the processor 110. Upon receiving an input of an analog signal output from the load cell 140, the ADC 150 converts the analog signal into a digital signal, and outputs the digital signal to the processor 110.

The accelerometer 160 is a sensor that measures an acceleration. For example, the accelerometer 160 is electrically connected to the ADC 170. Upon measuring an acceleration, the accelerometer 160 outputs an analog signal that indicates the measurement result to the ADC 170. An acceleration (e.g., G-forces, acceleration of gravity, static acceleration, proper acceleration) may be taken as an example of a "force that is acting on the weighing apparatus, and that differs from the load acting on the load receiving device" in the present invention. Moreover, an acceleration measurement may be taken as an example of "force detection" in the present invention.

The ADC 170 is a circuit that converts an analog signal into a digital signal. For example, the ADC 170 is electrically connected to the accelerometer 160 and the processor 110. Upon receiving an input of an analog signal output from the accelerometer 160, the ADC 170 converts the analog signal into a digital signal, and outputs the digital signal to the processor 110.

The processor 110 is an electronic device that processes the converted data of the output signal of the load cell 140 as a weighed value in mass units, based on the digital data output from the ADC 150 and the ADC 170. For example, the processor 110 is electrically connected to the ADC 150, the ADC 170, and the digital display 180. The processor 110 outputs a signal indicating the process result to the digital display 180.

The digital display 180 is a device that determines high and low of a signal voltage, and controls every single pixel to display on a screen. For example, the digital display 180 is electrically connected to the processor 110. The digital display 180 performs screen display based on electric signals output from the processor 110.

In the present embodiment, with the purpose of preventing the description from becoming complicated, there is described a configuration such that the scale 100 is provided with a processor 110, a load receiving unit 130, a load cell 140, an ADC 150, an accelerometer 160, an ADC 170, and a digital display 180. Alternatively, the scale 100 may be provided with a plurality of processors 110, load receiving units 130, load cells 140, ADCs 150, accelerometers 160, ADCs 170, and digital displays 180.

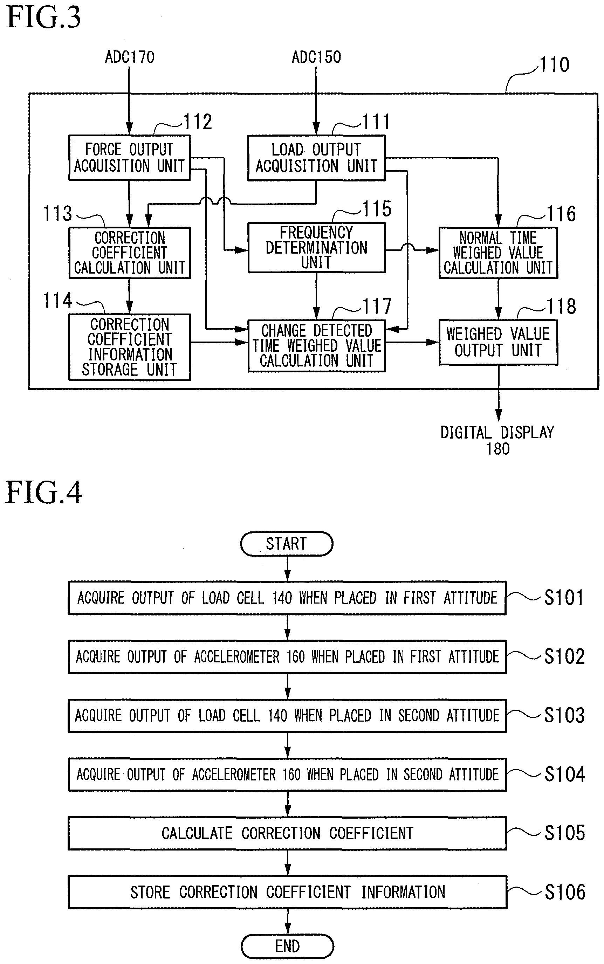

FIG. 3 shows an example of a block configuration of the processor 110 according to the first embodiment. The processor 110 according to the present embodiment has a load output acquisition unit 111, a force output acquisition unit 112, a correction coefficient calculation unit 113, a correction coefficient information storage unit 114, a frequency determination unit 115, a normal time weighed value calculation unit 116, a change detected time weighed value calculation unit 117, and a weighed value output unit 118. In the following description, the function and operation of each constituent are described in detail.

The load output acquisition unit 111 acquires an output of the load cell 140.

The force output acquisition unit 112 acquires an output of the accelerometer 160.

The correction coefficient calculation unit 113 treats a change amount of an output of the load cell 140 with respect to a change amount of an output of the accelerometer 160, as a correction coefficient for correcting an output of the load cell 140, based on: outputs of the load cell 140 and the accelerometer 160 acquired respectively by the load output acquisition unit 111 and the force output acquisition unit 112, for when the scale 100 with zero load applied thereto is placed in a first attitude; and outputs of the load cell 140 and the accelerometer 160 acquired respectively by the load output acquisition unit 111 and the force output acquisition unit 112, for when the scale 100 with zero load applied thereto is placed in a second attitude. Here, "with zero load applied thereto" refers to "a state where no object to be weighed is placed on the load receiving unit 130". The first attitude or the second attitude can include, for example, a horizontal attitude, a vertical attitude, an inclined attitude, or a reversed attitude.

In other words, the correction coefficient calculation unit 113 obtains a first output of the load cell 140 acquired by the load output acquisition unit 111 and a second output of the accelerometer 160 acquired by the force output acquisition unit 112, for when the scale 100 with zero load applied thereto is placed in a first attitude, obtains a third output of the load cell 140 acquired by the load output acquisition unit 111 and a fourth output of the accelerometer 160 acquired by the force output acquisition unit 112, for when the scale 100 with zero load applied thereto is placed in a second attitude, which differs from the first attitude, and treats a difference between the third output and the first output (a change amount of an output of the load cell 140) relative to a difference between the fourth output and the second output (a change amount of an output of the accelerometer 160), as a correction coefficient for correcting an output of the load cell 140.

The correction coefficient information storage unit 114 stores information of correction coefficients calculated by the correction coefficient calculation unit 113.

The frequency determination unit 115 determines, in a case where a change occurs in the output of the accelerometer 160 at the time of weighing, whether or not the frequency of this change is smaller than a threshold value.

The normal time weighed value calculation unit 116 takes the output value of the load cell 140 as a weighed value.

The change detected time weighed value calculation unit 117, in a case where the frequency determination unit 115 determines the frequency as being smaller than the threshold value, treats a value that is calculated by subtracting, from the output value of the load cell 140, the value obtained by multiplying the output value of the accelerometer 160 by the correction coefficient calculated by the correction coefficient calculation unit 113, as a weighed value.

The weighed value output unit 118 outputs a signal for displaying a weighed value to the digital display 180.

FIG. 4 shows an example of a flow chart showing the processor 110 according to an embodiment. In the description of this flowchart, a process of setting a correction coefficient is described in detail. This operation is described, with reference to FIG. 1 through FIG. 3.

When setting a correction coefficient, the operator that operates the scale 100 switches the operation mode of the scale 100, for example, to a mode for setting a correction coefficient. The operator then places the scale 100 with zero load applied thereto in the first attitude, and, for example, performs a predetermined first operation to make the processor 110 recognize the scale 100 as having been placed in the first attitude. As the first attitude, the operator places the scale 100 so that the load receiving unit 130 is positioned on the upper side for example. As the predetermined first operation, the operator then presses a button provided for making the processor 110 recognize the scale 100 as having been placed in the first attitude for example.

Once the predetermined first operation has been performed, the load output acquisition unit 111 of the processor 110 acquires an output of the load cell 140 (S101). For example, the load output acquisition unit 111 samples a digital signal output from the ADC 150 at the timing at which the predetermined first operation is performed, to thereby acquire an output of the load cell 140. If the digital display 180 is set to display the weighed value at zero in the state where the scale 100 with zero load applied thereto is placed with the load receiving unit 130 turned up, the load cell 140 measures a value of zero. The load output acquisition unit 111 then outputs to the correction coefficient calculation unit 113, the first load data indicating the acquired output value.

On the other hand, once the predetermined first operation has been performed, the force output acquisition unit 112 of the processor 110 acquires an output of the accelerometer 160 (S102). For example, the force output acquisition unit 112 samples a digital signal output from the ADC 170 at the timing at which the predetermined first operation is performed, to thereby acquire an output of the accelerometer 160. The accelerometer 160 measures the value of a gravitational acceleration. The force output acquisition unit 112 then outputs to the correction coefficient calculation unit 113, the first force data indicating the acquired output value.

Next, the operator places the scale 100 with zero load applied thereto in the second attitude, and, for example, performs a predetermined second operation to make the processor 110 recognize the scale 100 as having been placed in the second attitude. As the second attitude, the operator places the scale 100 with the load receiving unit 130 turned down for example. As the predetermined second operation, the operator then presses a button provided for making the processor 110 recognize the scale 100 as having been placed in the second attitude for example.

Once the predetermined second operation has been performed, the load output acquisition unit 111 of the processor 110 acquires an output of the load cell 140 (S103). For example, the load output acquisition unit 111 samples a digital signal output from the ADC 150 at the timing at which the predetermined second operation is performed, to thereby acquire an output of the load cell 140. If the digital display 180 is set to display the weighed value at zero in the state where the scale 100 with zero load applied thereto is placed in the manner with the load receiving unit 130 turned up, the load cell 140 measures a value that includes the weight of the load cell 140, the weight of part of the casing of the scale 100, and the like. The load output acquisition unit 111 then outputs to the correction coefficient calculation unit 113, the second load data indicating the acquired output value.

On the other hand, once the predetermined second operation has been performed, the force output acquisition unit 112 of the processor 110 acquires an output of the accelerometer 160 (S104). For example, the force output acquisition unit 112 samples a digital signal output from the ADC 170 at the timing at which the predetermined second operation is performed, to thereby acquire an output of the accelerometer 160. The accelerometer 160 measures the value of a gravitational acceleration in a direction opposite of that in the case where the scale 100 is placed in the manner with the load receiving unit 130 turned up. The force output acquisition unit 112 then outputs to the correction coefficient calculation unit 113, the second force data indicating the acquired output value.

Upon receiving the first load data, the first force data, the second load data, and the second force data respectively, the correction coefficient calculation unit 113 of the processor 110 treats the change amount of the output of the load cell 140 with respect to the change amount of the output of the accelerometer 160 as a correction coefficient for correcting the output of the load cell 140, based on these data (S105). For example, where the output value of the load cell 140 indicated by the first load data is taken as SG1, the output value of the accelerometer 160 indicated by the first force data is taken as ACC1, the output value of the load cell 140 indicated by the second load data is taken as SG2, and the output value of the accelerometer 160 indicated by the second force data is taken as ACC2, the correction coefficient calculation unit 113 calculates a correction coefficient CC in the manner expressed by Equation (1).
[Equation 1]

$$CC = (SG2 - SG1) / (ACC2 - ACC1) \quad (1)$$

The correction coefficient calculation unit 113 stores information indicating the calculated correction coefficient into the correction coefficient information storage unit 114 (S106). In this manner, a correction coefficient is set in the scale 100.

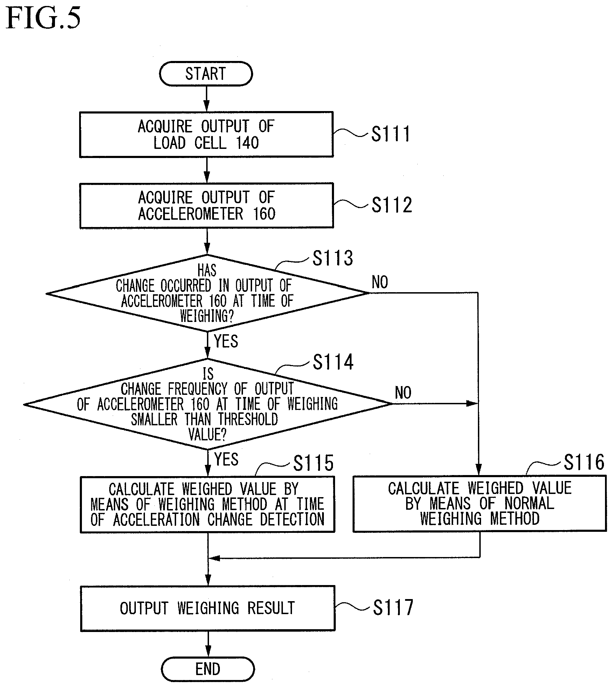

FIG. 5 shows an example of an operation flow of the processor 110 according to the first embodiment. In this operation flow, there is described in detail a process in the case where low frequency vibration is applied to the scale 100 at the time of weighing. This operation flow is described, with reference to FIG. 1 through FIG. 4.

When weighing, the user of the scale 100 switches the operation mode of the scale 100, for example, to a weighing mode for performing weighing. The user then places an object to be weighed on the load receiving unit 130 of the scale 100.

When the object to be weighed is placed on the load receiving unit 130 of the scale 100, the load output acquisition unit 111 of the processor 110 acquires an output of the load cell 140 (S111). For example, the load output acquisition unit 111 repeatedly samples digital signals output from the ADC 150 for a predetermined period of time from the moment the object to be weighed was placed on the load receiving unit 130 of the scale 100, to thereby acquire an output of the load cell 140. At each time when the output of the load cell 140 is acquired, the load output acquisition unit 111 outputs, to the normal time weighed value calculation unit 116 and the change detected time weighed value calculation unit 117, the load data indicating the acquired output value.

On the other hand, when the object to be weighed is placed on the load receiving unit 130 of the scale 100, the force output acquisition unit 112 of the processor 110 acquires an output of the accelerometer 160 (S 112). For example, the force output acquisition unit 112 repeatedly samples digital signals output from the ADC 170 for a predetermined period of time from the moment the object to be weighed was placed on the load receiving unit 130 of the scale 100, to thereby acquire an output of the accelerometer 160. At each time when the output of the accelerometer 160 is acquired, the force output acquisition unit 112 outputs, to the frequency determination unit 115 and the change detected time weighed value calculation unit 117, the force data indicating the acquired output value.

Upon receiving a plurality of force data from the force output acquisition unit 112, the frequency determination unit 115 of the processor 110 determines whether or not any change has occurred in the output of the accelerometer 160 indicated by each of the force data (S 113). For example, if vibration is applied to the scale 100, a change occurs in the output of the accelerometer 160.

The frequency determination unit 115 then determines, in a case where a change is determined as occurring in the output of the accelerometer 160 (S 113: YES), whether or not the frequency of this change is smaller than a threshold value (S114). For example, the threshold value is set to a value for detecting low frequency vibration, the removal of which by means of a filtering process is not appropriate. Therefore, if this type of low frequency vibration is applied to the scale 100, the frequency determination unit 115 determines the frequency as being smaller than the threshold value. If the frequency is determined as being smaller than the threshold value (S 114: YES), the frequency determination unit 115 then transmits, to the change detected time weighed value calculation unit 117, notification data that notifies of the determination result.

The change detected time weighed value calculation unit 117 of the processor 110 receives load data from the load output acquisition unit 111, and receives force data from the force output acquisition unit 112. Upon receiving the notification data from the frequency determination unit 115, the change detected time weighed value calculation unit 117 calculates a weighed value based on; the output value of the load cell 140 indicated by the load data, the output value of the accelerometer 160 indicated by the force data, and the correction coefficient stored in the correction coefficient information storage unit 114 (S115). For example, where the output value of the load cell 140 is taken as SG, the output value of the accelerometer 160 is taken as ACC, and the correction coefficient is taken as CC, the change detected time weighed value calculation unit 117 calculates a weighed value CCSG in the manner expressed by Equation (2).
[Equation 2]

$$CCSG = SG - CC \times ACC \quad (2)$$

The change detected time weighed value calculation unit 117 then transmits the weighed value data indicating the calculated weighed value to the weighed value output unit 118.

Upon receiving the weighed value data from the change detected time weighed value calculation unit 117, the weighed value output unit 118 of the processor 110 outputs a signal for displaying the weighed value indicated by the weighed value data (S 117) to the digital display 180. In this manner, even if the scale 100 received low frequency vibration, the digital display 180 displays the weighed value, for which the influence of this vibration has been compensated.

On the other hand, if no change is determined in step S 113 as occurring in the output of the accelerometer 160 (S113: NO), the frequency determination unit 115 then transmits, to the normal time weighed value calculation unit 116, notification data that notifies of the determination result. Moreover, if the frequency is determined in step S 114 as not being smaller than the threshold value (S 114: NO), the frequency determination unit 115 then transmits, to the normal time weighed value calculation unit 116, notification data that notifies of the determination result.

Upon receiving the notification data from the frequency determination unit 115, the normal time weighed value calculation unit 116 of the processor 110 takes an output value of the load cell 140 as a weighed value (S116). The normal time weighed value calculation unit 116 then transmits the weighed value data indicating the calculated weighed value to the weighed value output unit 118.

Upon receiving the weighed value data from the normal time weighed value calculation unit 116, the weighed value output unit 118 of the processor 110 outputs a signal for displaying the weighed value indicated by the weighed value data (S117) to the digital display 180. In this manner, the digital display 180 displays the weighed value.

As described above, the scale 100 weighs the mass of an object. The scale 100 is provided with a load receiving unit 130 that is provided for receiving a load. Moreover, the scale 100 is provided with a load cell 140 that is provided for detecting a load acting on the load receiving unit 130. Furthermore, the scale 100 is provided with an accelerometer 160 that is provided for detecting an acceleration. Moreover, the scale 100 is provided with a processor 110 that data-processes the output of the load cell 140 as a weighed value in mass units. The processor 110 acquires an output of the load cell 140. Moreover, the processor 110 acquires an output of the accelerometer 160. The processor 110 treats a change amount of an output of the load cell 140 with respect to a change amount of an output of the accelerometer 160, as a correction coefficient for correcting an output of the load cell 140, based on: outputs of the load cell 140 and the accelerometer 160 acquired when the scale 100 with zero load applied thereto is placed in a first attitude; and outputs of the load cell 140 and the accelerometer 160 acquired when the scale 100 with zero load applied thereto is placed in a second attitude, which differs from the first attitude.

In this manner, according to the scale 100, it is possible to calculate the change amount of the output of the load cell 140 with respect to the change amount of the output of the accelerometer 160 as a correction coefficient for correcting the output of the load cell 140, without using a specialized apparatus such as one that applies a standard reference vibration to the scale 100.

Moreover, as described above, the scale 100 according to the present embodiment determines, in a case where a change occurs in the output of the accelerometer 160 at the time of weighing, whether or not the frequency of this change is smaller than a threshold value. The scale 100, in a case where the frequency is determined as being smaller than the threshold value, treats a value that is calculated by subtracting, from the output value of the load cell 140, the value obtained by multiplying the output value of the accelerometer 160 by the correction coefficient, as a weighed value.

In this manner, according to the scale 100 of the present embodiment, even if the scale 100 received low frequency vibration, it is possible to calculate a weighed value, for which the influence of this vibration has been compensated.

Incidentally, there are some scales that are provided with a function that enables weighing without the need for setting the display to zero during the period between the moment when the power is turned on and the moment of use. A scale that has this type of function performs on a periodic basis a process of automatically setting the display to zero without intervention of an operator when zero load is applied thereto, and when a load is detected, the scale calculates a weighed value on the basis of zero point for at the point in time. Therefore, the scale always needs to be stored in the same horizontal position as that at the time of weighing, so that the display is set to zero in the same horizontal position as that at the time of weighing. However, a scale is often stored by leaning against a wall due to issues of available storage space or the like. If the scale has not been stored in a horizontal position, a precise weighed value cannot be obtained unless the user places the scale in a horizontal position at the time of weighing and performs the process of setting the display to zero, and then starts weighing. In the following description, there is described in detail a scale 100 that is provided with a processor 110 according to a second embodiment, and that can solve this type of problem also.

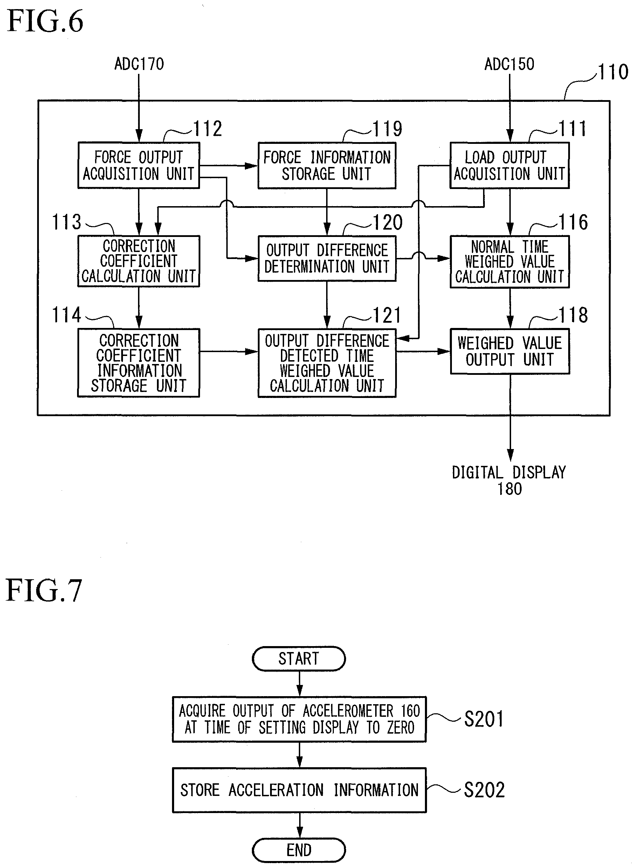

FIG. 6 shows an example of a block configuration of the processor 110 according to the second embodiment. The processor 110 according to the present embodiment has a load output acquisition unit 111, a force output acquisition unit 112, a correction coefficient calculation unit 113, a correction coefficient information storage unit 114, a force information storage unit 119, an output difference determination unit 120, a normal time weighed value calculation unit 116, an output difference detected time weighed value calculation unit 121, and a weighed value output unit 118. In the following description, the function and operation of each constituent are described in detail.

The constituents of the same names with the same reference symbols among the constituents of the processor 110 of the previously described embodiment, and the processor 110 of the present embodiment, exhibit similar functions and operations.

When the display is automatically set to zero without intervention of an operator, the force information storage unit 119 stores information of the gravitational acceleration measured by the accelerometer 160.

The output difference determination unit 120 determines whether or not the output difference between the output of the accelerometer 160 when the display is automatically set to zero without intervention of an operator, and the output of the accelerometer 160 at the time of weighing, is within an acceptable value.

The output difference detected time weighed value calculation unit 121, in a case where the output difference determination unit 120 determines the output difference as not being within the acceptable value, treats a value that is calculated by subtracting, from the output value of the load cell 140, the value obtained by multiplying the output difference value by a correction coefficient calculated by the correction coefficient calculation unit 113, as a weighed value.

FIG. 7 shows an example of an operation flow of the processor 110 according to the second embodiment. In the description of this flow chart, there is described in detail a process performed when the display is automatically set to zero without intervention of an operator. This flow chart is described, with reference to FIG. 1 through FIG. 6.

In order to realize a function of enabling weighing without the need for setting the display to zero after the power is turned on and before use, the scale 100 performs on a periodic basis a process of automatically setting the display to zero without intervention of an operator when zero load is applied thereto.

If the display is automatically set to zero without operator intervention when zero load is applied, the force output acquisition unit 112 of the processor 110 acquires an output of the accelerometer 160 (S201). For example, the force output acquisition unit 112 samples a digital signal output from the ADC 170 at the timing at which the display is automatically set to zero without operator intervention when zero load is applied, to thereby acquire an output of the accelerometer 160. For example, in a case where the scale 100 is not placed horizontally and the display thereof is set to zero in a state of leaning against a wall, the accelerometer 160 measures a gravitational acceleration in a direction different from that of the gravitational velocity in the case of the scale 100 being placed horizontally. Then the force output acquisition unit 112 acquires a gravitational acceleration value measured by the accelerometer 160. The force output acquisition unit 112 then stores the information of the acquired gravitational acceleration into the force information storage unit 119 (S202). In this manner, the scale 100 stores information of the gravitational acceleration at the time of setting the display automatically to zero without operator intervention when zero load is applied.

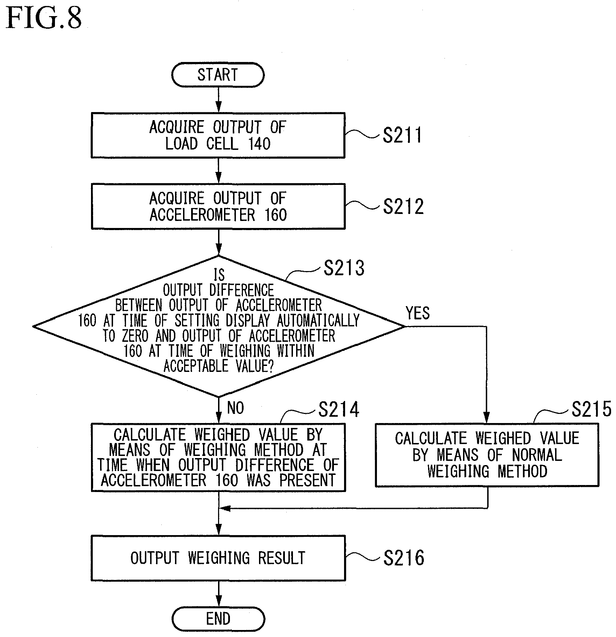

FIG. 8 shows an example of a flow chart of the processor 110 according to the second embodiment. In the description of this flow chart, there is described a process in the case where the attitude of the scale 100 with zero load applied thereto at the time of having the display automatically set to zero without operator intervention differs from the attitude of the scale 100 at the time of weighing. This flow chart is described, with reference to FIG. 1 through FIG. 7.

In the case of using the function that enables weighing without the need for setting the display to zero after the power is turned on and before use, the user of the scale 100 places an object to be weighed on the load receiving unit 130 of the scale 100 immediately after the power is turned on.

When the object to be weighed is placed on the load receiving unit 130 of the scale 100, the load output acquisition unit 111 of the processor 110 acquires an output of the load cell 140 (S211). For example, the load output acquisition unit 111 samples a digital signal output from the ADC 150 at the timing at which the object to be weighed is placed on the load receiving unit 130 of the scale 100, to thereby acquire an output of the load cell 140. The load output acquisition unit 111 then outputs, to the normal time weighed value calculation unit 116 and the output difference detected time weighed value calculation unit 121, the load data indicating the acquired output value.

On the other hand, when the object to be weighed is placed on the load receiving unit 130 of the scale 100, the force output acquisition unit 112 of the processor 110 acquires an output of the accelerometer 160 (S212). For example, the force output acquisition unit 112 samples a digital signal output from the ADC 170 at the timing at which the object to be weighed is placed on the load receiving unit 130 of the scale 100, to thereby acquire an output of the accelerometer 160. For example, in a case where the scale 100 is placed horizontally at the time of weighing, the accelerometer 160 measures a gravitational acceleration in the case of the scale 100 being placed horizontally. Then the force output acquisition unit 112 acquires a gravitational acceleration value measured by the accelerometer 160. The force output acquisition unit 112 then outputs to the output difference determination unit 120, the force data indicating the acquired output value.

Upon receiving the force data from the force output acquisition unit 112, the output difference determination unit 120 of the processor 110 determines whether or not the difference between the gravitational acceleration value indicated by each of the force data and the gravitational acceleration value stored in the force information storage unit 119, is within the acceptable value (S213). For example, in the case where the scale 100 is not placed horizontally when the display is automatically set to zero without operator intervention while zero load is applied, an output difference occurs in the output of the accelerometer 160. The acceptable value with respect to this output difference is, for example, set to a value so that the attitude at the time when the display is automatically set to zero without operator intervention while zero load is applied, is determined as being an attitude acceptable with respect to the horizontal attitude. Therefore, in the case where the display is set to zero while the scale 100 is placed in this type of acceptable attitude, the output difference determination unit 120 determines the output difference as being within the acceptable value. If the output difference is determined as not being within the acceptable value (S213: NO), the output difference determination unit 120 transmits the output difference data indicating the output difference, to the output difference detected time weighed value calculation unit 121.

The output difference detected time weighed value calculation unit 121 of the processor 110 receives load data from the load output acquisition unit 111. Upon receiving the output difference data from the output difference determination unit 120, the output difference detected time weighed value calculation unit 121 calculates a weighed value, based on; the output difference value of the accelerometer 160 indicated by the output difference data, the output value of the load cell 140 indicated by the load data, and the correction coefficient stored in the correction coefficient information storage unit 114 (S214).

For example, where the output value of the load cell 140 is taken as SG, the correction coefficient is taken as CC, and the output difference value is taken as ACC0, the output difference detected time weighed value calculation unit 121 calculates a weighed value CCSG in the manner expressed by Equation (3).

[Equation 3]

$$CCSG = SG - CC \times ACC0 \quad (3)$$

The output difference detected time weighed value calculation unit 121 then transmits the weighed value data indicating the calculated weighed value to the weighed value output unit 118.

Upon receiving the weighed value data from the output difference detected time weighed value calculation unit 121, the weighed value output unit 118 of the processor 110 outputs a signal for displaying the weighed value indicated by the weighed value data (S216) to the digital display 180. In this manner, even if the attitude of the scale 100 at the time when the display is automatically set to zero without operator intervention while zero load is applied, differs from the attitude of the scale 100 at the time of weighing, the digital display 180 displays a weighed value, for which the influence of the attitude difference has been compensated.

On the other hand, if the output difference is determined in step S213 as being within the acceptable value (S213: NO), the output difference determination unit 120 then transmits, to the normal time weighed value calculation unit 116, notification data that notifies of the determination result.

Upon receiving the notification data from the output difference determination unit 120, the normal time weighed value calculation unit 116 of the processor 110 takes the output value of the load cell 140 as a weighed value (S215). The normal time weighed value calculation unit 116 then transmits the weighed value data indicating the calculated weighed value to the weighed value output unit 118.

Upon receiving the weighed value data from the normal time weighed value calculation unit 116, the weighed value output unit 118 of the processor 110 outputs a signal for displaying the weighed value indicated by the weighed value data (S216) to the digital display 180. In this manner, the digital display 180 displays the weighed value.

As described above, the scale 100 according to the present embodiment determines whether or not the output difference between the output of the accelerometer 160 when the display is automatically set to zero without intervention of an operator, and the output of the accelerometer 160 at the time of weighing, is within an acceptable value. The scale 100, in a case where the output difference is determined as not being within the acceptable value, treats a value that is calculated by subtracting, from the output value of the load cell 140, the value obtained by multiplying the output difference value by the correction coefficient, as a weighed value.

In this manner, according to the scale 100 of the present embodiment, even if the attitude of the scale 100 at the time when the display is automatically set to zero without operator intervention while zero load is applied, differs from the attitude of the scale 100 at the time of weighing, it is possible to calculate a weighed value, for which the influence of the attitude difference has been compensated.

Incidentally, the span coefficient of the load cell may change for various reasons. For example, the span coefficient of the load cell changes due to changes occurring in the strain body across the ages. Moreover, for example, the span coefficient of the load cell changes as a result of the scale being used beyond the predetermined durability. Furthermore, the span coefficient of the load cell changes as a result of an unexpected load being applied, for example, when the scale is dropped. Normally, the span coefficient is adjusted by mounting a weight of the weighing capacity. However, this type of adjustment method is difficult for general users. In the following description, there is described in detail a scale 100 that is provided with a processor 110 according to a third embodiment, and that can solve this type of problem also.

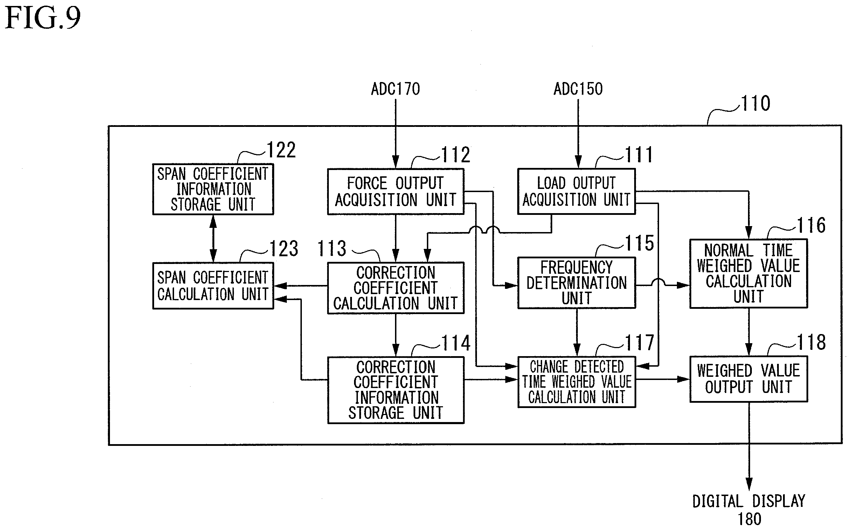

FIG. 9 shows an example of a block configuration of a processor 110 according to the third embodiment. The processor 110 according to the present embodiment has a load output acquisition unit 111, a force output acquisition unit 112, a correction coefficient calculation unit 113, a correction coefficient information storage unit 114, a frequency determination unit 115, a normal time weighed value calculation unit 116, a change detected time weighed value calculation unit 117, a weighed value output unit 118, a span coefficient information storage unit 122, and a span coefficient calculation unit 123. In the following description, the function and operation of each constituent are described in detail.

The constituents of the same names with the same reference symbols among the constituents of the processor 110 of the previously described embodiments, and the processor 110 of the present embodiment, exhibit similar functions and operations.

The span coefficient information storage unit 122 stores span coefficient information of the load cell 140. Here, a span coefficient is a coefficient value that associates an output of the load cell 140 and a weight value. When calculating a weighed value, the output value of the load cell 140 is multiplied by a span coefficient.

The span coefficient calculation unit 123 treats, as a span coefficient of the load cell 140 after shipment, a value that is calculated by multiplying a value obtained by dividing a correction coefficient calculated after shipment by the correction coefficient calculation unit 113 by a correction coefficient calculated before shipment by the correction coefficient calculation unit 113, by the span coefficient of the load cell 140 obtained before shipment.

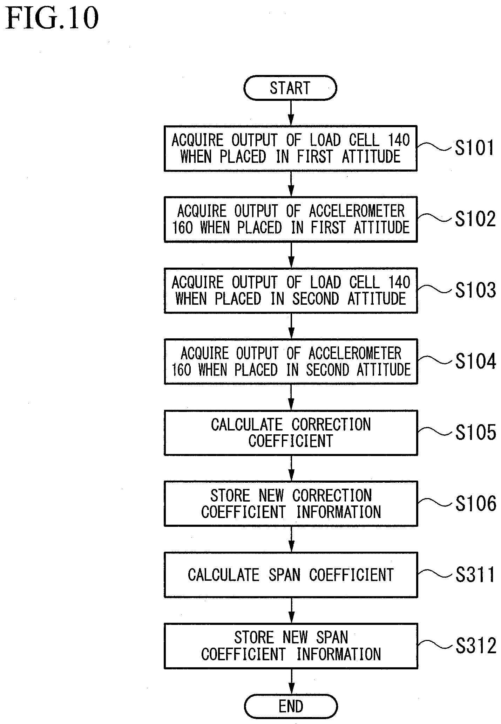

FIG. 10 shows an example of an operation flow of the processor 110 according to the third embodiment. In the description of this operation flow, there is described in detail a process in the case of adjusting the span coefficient of the load cell 140 after shipment. This operation flow is described, with reference to FIG. 1 through FIG. 9.

In the following description, the correction coefficient information storage unit 114 stores information of the correction coefficient calculated before shipment. Moreover, the span coefficient information storage unit 122 stores information of the span coefficient calculated before shipment.

When adjusting the span coefficient after shipment, the user of the scale 100 switches the operation mode of the scale 100, for example, to a mode for adjusting the span coefficient. The user then performs an operation for calculating a correction coefficient. When this type of operation has been performed, the processor 110 performs processes similar to those in step S101 through step S106 of FIG. 4. In this manner, the correction coefficient information storage unit 114 stores information of correction coefficients calculated after shipment, along with the information of the correction coefficient calculated before shipment.

When the information of the correction coefficient after shipment has been calculated, the span coefficient calculation unit 123 of the processor 110 calculates a span coefficient of the load cell 140, based on; the correction coefficient that is stored in the correction coefficient information storage unit 114 and that is calculated before shipment, the correction coefficient calculated after shipment, and the span coefficient that is stored in the span coefficient information storage unit 122 and that is obtained before shipment (S311).

For example, where the correction coefficient calculated before shipment is taken as CC1, the correction coefficient calculated after shipment is taken as CC2, and the span coefficient obtained before shipment is taken as SC1, the span coefficient calculation unit 123 calculates a current span coefficient SC2 after shipment in the manner expressed by Equation (4).
[Equation 4]

$$SC2 = SC1 \times (CC2 / CC1) \quad (4)$$

Then, the span coefficient calculation unit 123 stores information indicating the calculated span coefficient into the span coefficient information storage unit 122 (S312). In this manner, the span coefficient information storage unit 122 stores information of the span coefficient obtained before shipment and the information of the span coefficient obtained after shipment.

When calculating a weighed value subsequently, the processor 110 makes reference to the information of the newly calculated correction coefficient and the information of the span coefficient.

As described above, the scale 100 according to the present embodiment treats, as a span coefficient of the load cell 140 after shipment, a value that is calculated by multiplying a value obtained by dividing a correction coefficient calculated after shipment by a correction coefficient calculated before shipment, by the span coefficient of the load cell 140 obtained before shipment.

In this manner, according to the scale 100 of the present embodiment, even if the span coefficient changes after shipment, the span coefficient can be adjusted by means of a simple method that can be performed by general users.

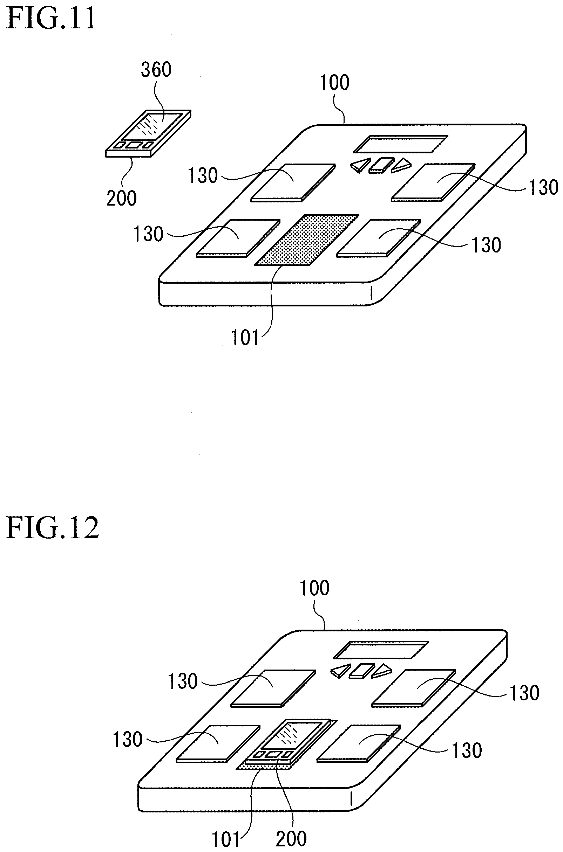

FIG. 11 and FIG. 12 show an example of a configuration of a weighing system according to an embodiment. The weighing system according to the present embodiment is a system to be used for weighing the mass of an object.

The weighing system according to the present embodiment is provided with a scale 100 and a smartphone 200.

Here, the smartphone 200 is a mobile phone that also has a personal portable computer function. The smartphone 200 may be taken as an example of a "another body/portable information terminal (mobile terminal, personal digital assistant)" in the present invention.

On the upper surface of the scale 100, there is provided an attachment unit 101 on which the smartphone 200 is attached. The smartphone 200 is attached on and/or detached from the attachment unit 101 of the scale 100. FIG. 11 shows a state where the smartphone 200 has been removed from the attachment unit 101 of the scale 100. FIG. 12 shows a state where the smartphone 200 is attached on the attachment unit 101 of the scale 100.

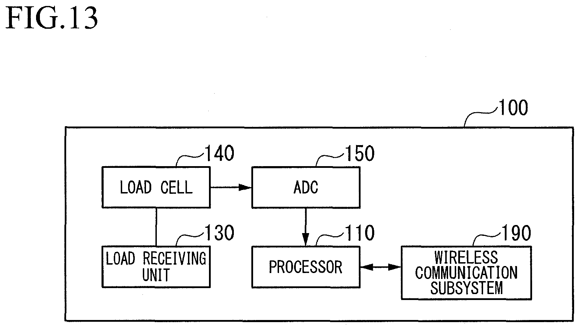

FIG. 13 shows an example of a hardware configuration of the scale 100, which is a constituent of the weighing system. The scale 100, which is a constituent of the weighing system, is provided with a processor 110, a load receiving unit 130, a load cell 140, an ADC 150, and a wireless communication subsystem 190.

The constituents of the same names with the same reference symbols among the constituents of the scale 100 of the previously described embodiments, and the scale 100 of the present embodiment, exhibit similar functions and operations.

The communication function of the scale 100 may be subserved through one or more wireless communication subsystems 190 that can include a wireless frequency receiver and transmitter, and/or an optical receiver and transmitter. The specific design and implementation of the wireless communication subsystem 190 may depend on a communication network through which the scale 100 operates. For example, the scale 100 can include a wireless communication subsystem 190 that is designed to operate through a GSM (global system for mobile communications) (registered trademark) network, a GPRS (general packet radio service) network, an EDGE (enhanced data GSM environment) network, a Wi-Fi (wireless fidelity) network, and/or a Bluetooth (registered trademark) network.

In particular, the wireless communication subsystem 190 can include a hosting protocol that enables a configuration in which the scale 100 serves as a base station for the smartphone 200.

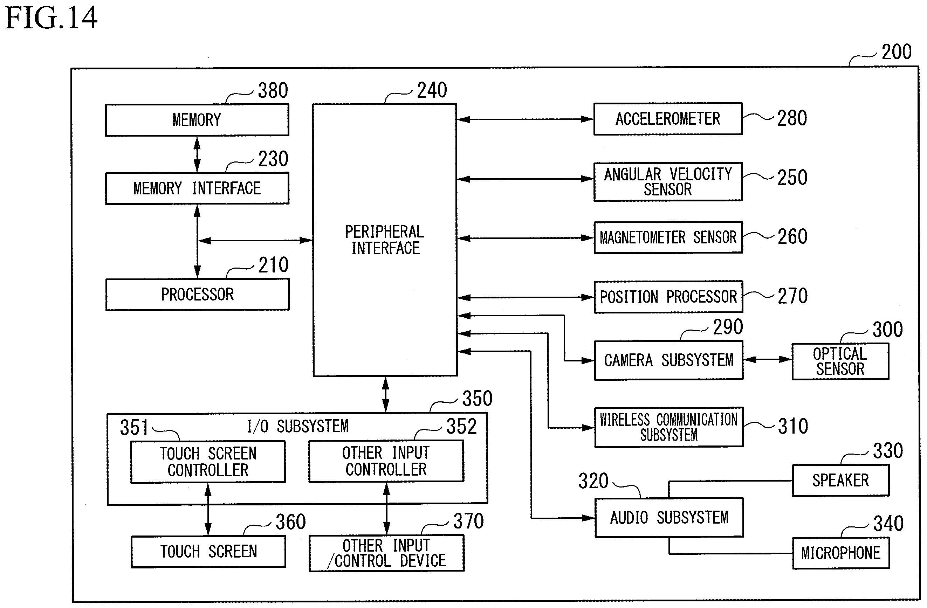

FIG. 14 shows an example of a hardware configuration of the smartphone 200. The smartphone 200 can include a memory interface 230, one or more data processors, image processors, and/or processors 210, and a peripheral interface 240. The memory interface 230, one or more of the processors 210, and/or the peripheral interface 240 may be individual components, or may be integrated on one or more integrated circuits. Various constituents of the smartphone 200 may be connected, for example, through one or more communication buses or signal lines.

In the smartphone 200, sensors, devices, and subsystems may be connected to the peripheral interface 240 so as to facilitate a number of functions. Examples of the sensors include an angular velocity sensor 250 and a magnetometer sensor 260. In the smartphone 200, a position processor 270 can be connected to the peripheral interface 240 in order to provide geographical positioning. In the smartphone 200, an accelerometer 280 can also be connected to the peripheral interface 240 in order to provide data that can be used for determining velocity changes and/or movement direction changes of a mobile device.

In the smartphone 200, a camera subsystem 290 and/or an optical sensor 300 such as a charge-coupled device and a complementary metal-oxide semiconductor optical sensor may be used in order to subserve a camera function such as photo recording and video clip recording.

The communication function of the smartphone 200 may be subserved through one or more wireless communication subsystems 310 that can include a wireless frequency receiver and transmitter, and/or an optical receiver and transmitter. The specific design and implementation of the wireless communication subsystem 310 may depend on a communication network through which the smartphone 200 operates. For example, the smartphone 200 can include a wireless communication subsystem 310 that is designed to operate through a GSM (registered trademark) network, a GPRS network, an EDGE network, a Wi-Fi network, and/or a Bluetooth (registered trademark) network. In particular, the wireless communication subsystem 310 can include a hosting protocol that enables a configuration in which the smartphone 200 serves as a base station for the scale 100.

An audio subsystem 320 may be connected to a speaker 330 and a microphone 340 in order to subserve functions that are capable of using sound such as voice recognition, voice repetition, digital recording, and telephony communication functions.

An I/O (input/output) subsystem 350 can include a touch screen controller 351, and/or one or more other input controllers 352. The touch screen controller 351 may be connected to a touch screen 360 or a pad. The touch screen 360 and the touch screen controller 351 can detect contact, movement, and/or damage, for example, using a plurality of contact tactile sensing techniques such as capacitive type, resistance type, infrared ray type, and surface acoustic wave techniques, another proximity sensor array, or another device, for determining one or more points of contact made with the touch screen 360.

In the smartphone 200, one or more of the other input controllers 352 may be connected to one or more other input/control devices 370 such as a button, a locker switch, a thumb wheel, an infrared ray port, a USB (universal serial bus) port, and/or a pointing device such as a stylus. One or more of the buttons can include up/down buttons for performing volume control of the speaker 330 and/or the microphone 340.

In a given embodiment, the smartphone 200 may be such that pressing down a given button for a first period of time releases locking of the touch screen 360 or the pad, and pressing the button down for a second period of time, which is longer than the first period of time turns the power of the device on or off. Moreover, in a given embodiment, the smartphone 200 may be such that the user can customize functions of one or more of the buttons. Furthermore, in a given embodiment, the touch screen 360 may be used to realize a virtual or soft button and/or keyboard for example.

In a given embodiment, the smartphone 200 may present recorded sound and/or video files such as MP3 (MPEG audio layer 3), AAC (advanced audio coding), and MPEG (moving picture experts group) files. In a given embodiment, the smartphone 200 may include a function of an MP3 player.

The memory interface 230 may be connected to a memory 380. The memory 380 may include a high speed random access memory, one or more magnetic disk memory devices, one or more optical memory devices, and/or a nonvolatile memory such as a flash memory. The memory 380 can store an operating system including an embedded operating system such as Darwin, RTXC, LINUX (registered trademark), UNIX (registered trademark), OSX, WINDOWS (registered trademark), or VxWorks (registered trademark). The operating system may include commands for processing basic system services and commands for executing hardware-dependent processes. In a given embodiment, the operating system may include a kernel.

Moreover, the memory 380 may store communication commands for subserving communication between one or more of the scales 100, one or more computers, and/or one or more servers. The memory 380 may include graphical user interface commands for subserving graphical user interface processes, sensor processing commands for subserving sensor-related processes and functions, telephony commands for subserving telephony-related processes and functions, electronic message processing commands for subserving electronic message-related processes and functions, web browsing commands for subserving web browsing-related processes and functions, media processing commands for subserving media processing-related processes and functions, GPS (global positioning system)/navigation commands for subserving GPS/navigation-related processes and functions, and/or camera commands for subserving camera-related processes and functions. Moreover, the memory 380 may store security commands, web video commands for subserving web video-related process and functions, and/or other software commands such as web shopping commands for subserving web shopping-related processes and functions. In a given embodiment, the media processing commands are divided into sound processing commands and video processing commands for subserving respectively sound processing-related processes and functions and video processing-related processes and functions. Furthermore, the memory 380 may store an activation record, and an international mobile equipment identifier or similar hardware identifier. The memory 380 can include magnetometer data and one or more estimated magnetic field vectors.

Each of the specific commands and applications described above may correspond to a set to commands for executing one or more of the functions described above. These commands may not have to be implemented as individual software programs, procedures, or modules. The memory 380 may include commands other than these commands, and may include a less number of commands. Furthermore, the various functions of the smartphone 200 may be carried out by means of hardware and/or software that include one or more signal processes and/or integrated circuits for specific applications.

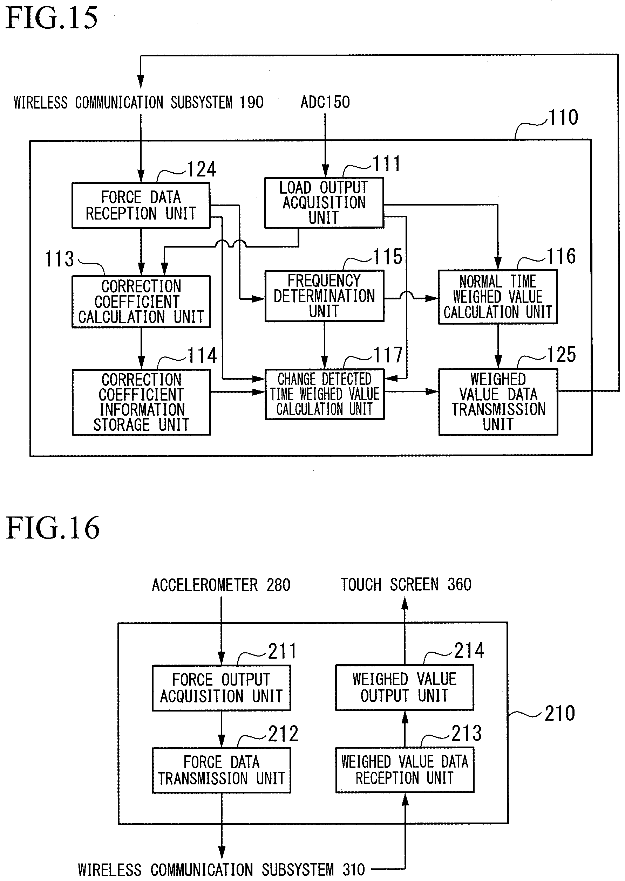

FIG. 15 shows an example of a block configuration of the processor 110 according to a fourth embodiment. The processor 110 according to the present embodiment has a load output acquisition unit 111, a force data reception unit 124, a correction coefficient calculation unit 113, a correction coefficient information storage unit 114, a frequency determination unit 115, a normal time weighed value calculation unit 116, a change detected time weighed value calculation unit 117, and a weighed value data transmission unit 125. In the following description, the function and operation of each constituent are described in detail.

The constituents of the same names with the same reference symbols among the constituents of the processor 110 of the previously described embodiments, and the processor 110 of the present embodiment, exhibit similar functions and operations.

The force data reception unit 124 receives force data indicating the output of the accelerometer 280 transmitted from the smartphone 200.

The correction coefficient calculation unit 113 treats a change amount of an output of the load cell 140 with respect to a change amount of an output of the accelerometer 280, as a correction coefficient for correcting an output of the load cell 140, based on: an output of the load cell 140 acquired by the load output acquisition unit 111 and an output of the accelerometer 280 indicated by the force data received by the force data reception unit 124, for when the smartphone 200 is attached on the scale 100 with zero load applied thereto and the scale 100 is placed in a first attitude; and an output of the load cell 140 acquired by the load output acquisition unit 111 and an output of the accelerometer 280 indicated by the force data received by the force data reception unit 124, for when the smartphone 200 is attached on the scale 100 with zero load applied thereto and the scale 100 is placed in a second attitude, which differs from the first attitude. The first attitude or the second attitude can include, for example, a horizontal attitude, a vertical attitude, an inclined attitude, or a reversed attitude.

In other words, the correction coefficient calculation unit 113 obtains a first output of the load cell 140 acquired by the load output acquisition unit 111 and a second output of the accelerometer 280 indicated by the force data received by the force data reception unit 124, for when the smartphone 200 is attached on the scale 100 with zero load applied thereto and the scale 100 is placed in a first attitude, obtains a third output of the load cell 140 acquired by the load output acquisition unit 111 and a fourth output of the accelerometer 280 indicated by the force data received by the force data reception unit 124, for when the smartphone 200 is attached on the scale 100 with zero load applied thereto and the scale 100 is placed in a second attitude, which differs from the first attitude, and treats a difference between the third output and the first output (a change amount of an output of the load cell 140) relative to a difference between the fourth output and the second output (a change amount of an output of the accelerometer 280), as a correction coefficient for correcting an output of the load cell 140.

The frequency determination unit 115 determines, in a case where a change occurs in the output of the accelerometer 280 at the time of weighing, whether or not the frequency of this change is smaller than a threshold value.

The change detected time weighed value calculation unit 117, in a case where the frequency determination unit 115 determines the frequency as being smaller than the threshold value, treats a value that is calculated by subtracting, from the output value of the load cell 140, the value obtained by multiplying the output value of the accelerometer 280 by the correction coefficient calculated by the correction coefficient calculation unit 113, as a weighed value.

The weighed value data transmission unit 125 transmits weighed value data indicating a weighed value to the smartphone 200.

FIG. 16 shows an example of a block configuration of the processor 210 according to the fourth embodiment. The processor 210 according to the present embodiment has a force output acquisition unit 211, a force data transmission unit 212, a weighed value data reception unit 213, and a weighed value output unit 214. In the following description, the function and operation of each constituent are described in detail.

The force output acquisition unit 211 acquires an output of the accelerometer 280.

The force data transmission unit 212 transmits to the scale 100, the force data indicating the output acquired by the force output acquisition unit 211.

The weighed value data reception unit 213 receives the weighed value data indicating a weighed value from the scale 100.

The weighed value output unit 214 outputs to the touch screen 360, a signal for displaying the weighed value.

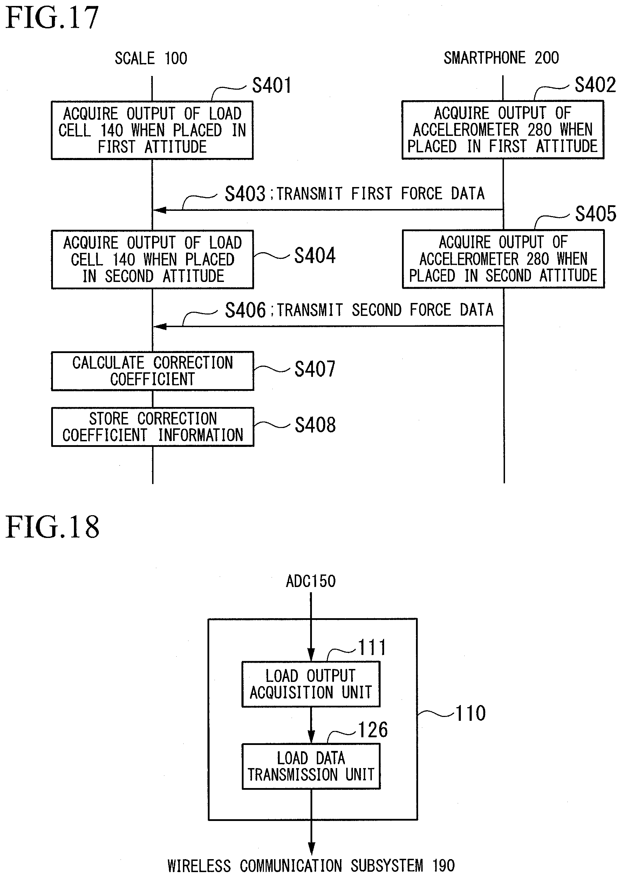

FIG. 17 shows an example of an operation sequence of the scale 100 and the smartphone 200 according to the fourth embodiment. In the description of this operation sequence, a process of setting a correction coefficient is described in detail. This operation sequence is described, with reference to FIG. 1 through FIG. 16.

When setting a correction coefficient, the operator that operates the scale 100 attaches the smartphone 200 on the attachment unit 101 of the scale 100, and connects the scale 100 and the smartphone 200 through wireless communication. The operator then switches the operation mode of the scale 100, for example, to a mode for setting a correction coefficient. Then, the operator places the scale 100 with zero load applied thereto in the first attitude, and performs, for example, a predetermined first operation to make the processor 110 of the scale 100 and the processor 210 of the smartphone 200 recognize the scale 100 as having been placed in the first attitude. As the first attitude, the operator places the scale 100 so that the load receiving unit 130 is positioned on the upper side for example. As the predetermined first operation, the operator then presses down a button provided for making the processor 110 of the scale 100 and the processor 210 of the smartphone 200 recognize the scale 100 as having been placed in the first attitude for example.

Once the predetermined first operation has been performed, the load output acquisition unit 111 of the processor 110 of the scale 100 performs a process similar to the process in step S101 of FIG. 4 to acquire an output of the load cell 140 (S401). The load output acquisition unit 111 then outputs to the correction coefficient calculation unit 113, the first load data indicating the acquired output value.

On the other hand, once the predetermined first operation has been performed, the force output acquisition unit 211 of the processor 210 of the smartphone 200 performs a process similar to the process of the scale 100 in step S102 of FIG. 4 to acquire an output of the accelerometer 280 (S402). The force output acquisition unit 211 then outputs to the force data transmission unit 212, the first force data indicating the acquired output value.

Upon receiving the first force data, the force data transmission unit 212 of the processor 210 of the smartphone 200 transmits the first force data to the scale 100 through the wireless communication subsystem 310 (S403).

Next, the operator places the scale 100 with zero load applied thereto in the second attitude, and performs, for example, a predetermined second operation to make the processor 110 of the scale 100 and the processor 210 of the smartphone 200 recognize the scale 100 as having been placed in the second attitude. As the second attitude, the operator places the scale 100 so that the load receiving unit 130 is positioned on the lower side for example. As the predetermined second operation, the operator then presses down a button provided for making the processor 110 of the scale 100 and the processor 210 of the smartphone 200 recognize the scale 100 as having been placed in the second attitude for example.

Once the predetermined second operation has been performed, the load output acquisition unit 111 of the processor 110 of the scale 100 performs a process similar to the process in step S103 of FIG. 4 to acquire an output of the load cell 140 (S404). The load output acquisition unit 111 then outputs to the correction coefficient calculation unit 113, the second load data indicating the acquired output value.

On the other hand, once the predetermined second operation has been performed, the force output acquisition unit 211 of the processor 210 of the smartphone 200 performs a process similar to the process of the scale 100 in step S104 of FIG. 4 to acquire an output of the accelerometer 280 (S405). The force output acquisition unit 211 then outputs to the force data transmission unit 212, the second force data indicating the acquired output value.

Upon receiving the second force data, the force data transmission unit 212 of the processor 210 of the smartphone 200 transmits the second force data to the scale 100 through the wireless communication subsystem 310 (S406).

Upon receiving the first load data, the first force data, the second load data, and the second force data respectively, the correction coefficient calculation unit 113 of the processor 110 of the scale 100 performs a process similar to the process in step S105 of FIG. 4, and treats the change amount of the output of the load cell 140 with respect to the change amount of the output of the accelerometer 280 as a correction coefficient for correcting the output of the load cell 140 (S407). The correction coefficient calculation unit 113 stores information indicating the calculated correction coefficient into the correction coefficient information storage unit 114 (S407). In this manner, a correction coefficient is set in the scale 100. This correction coefficient is referenced when calculating a weighed value as with the embodiments described above. In the weighing system, the accelerometer 280 of the smartphone 200 is used also when calculating a weighed value.

As described above, the weighing system is a system that weighs the mass of an object (measures the mass of an object). The weighing system is provided with a scale 100 that is provided with a load receiving unit 130 provided for receiving a load, and a load cell 140 provided for detecting a load acting on the load receiving unit 130. Moreover, the weighing system is provided with a smartphone 200 that is detachably provided on the scale 100 and includes an accelerometer 280 provided for detecting an acceleration, which is a force acting on the scale 100. The scale 100 of the present embodiment acquires an output of the load cell 140. On the other hand, the smartphone 200 according to the present embodiment 200 acquires an output of the accelerometer 280. The smartphone 200 then transmits to the scale 100, the force data indicating the acquired output. The scale 100 receives the force data transmitted from the smartphone 200. The scale 100 treats a change amount of an output of the load cell 140 with respect to a change amount of an output of the accelerometer 280, as a correction coefficient for correcting the output of the load cell 140, based on: an output of the load cell 140 acquired and an output of the accelerometer 280 indicated by the force data received, for when the smartphone 200 is attached on the scale 100 with zero load applied thereto and the scale 100 is placed in a first attitude; and an output of the load cell 140 acquired and an output of the accelerometer 280 indicated by the force data received, for when the smartphone 200 is attached on the scale 100 with zero load applied thereto and the scale 100 is placed in a second attitude, which differs from the first attitude.

In this manner, in the weighing system according to the present embodiment, it is possible to calculate the change amount of the output of the load cell 140 with respect to the change amount of the output of the accelerometer 160 as a correction coefficient for correcting the output of the load cell 140, with use of the smartphone 200, which is provided with the accelerometer 280, and without using a specialized apparatus such as one that applies a standard reference vibration to the scale 100.

FIG. 18 shows an example of a block configuration of the processor 110 according to a fifth embodiment. The processor 110 according to the present embodiment has a load output acquisition unit 111, and a load data transmission unit 126. In the following description, the function and operation of each constituent are described in detail.

The constituents of the same names with the same reference symbols among the constituents of the processor 110 of the previously described embodiments, and the processor 110 of the present embodiment, exhibit similar functions and operations.

The load data transmission unit 126 transmits to the smartphone 200, the load data indicating the output acquired by the load output acquisition unit 111.

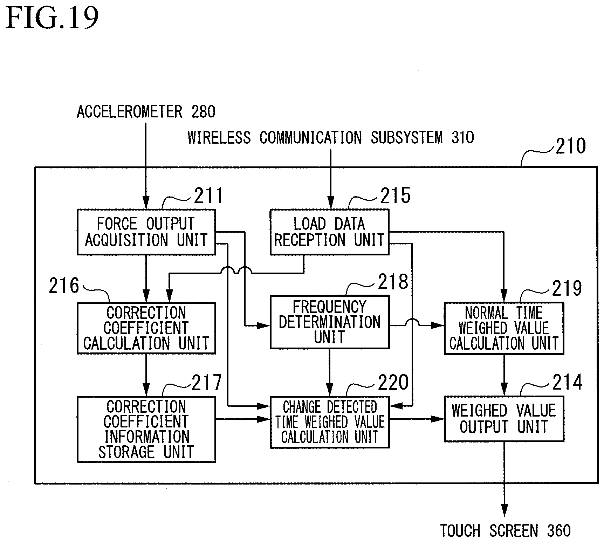

FIG. 19 shows an example of a block configuration of the processor 210 according to the fifth embodiment. The processor 210 according to the present embodiment has a load data reception unit 215, a force output acquisition unit 211, a correction coefficient calculation unit 216, a correction coefficient information storage unit 217, a frequency determination unit 218, a normal time weighed value calculation unit 219, a change detected time weighed value calculation unit 220, and a weighed value output unit 214. In the following description, the function and operation of each constituent are described in detail.

The constituents of the same names with the same reference symbols among the constituents of the processor 210 of the previously described embodiments, and the processor 210 of the present embodiment, exhibit similar functions and operations.

The load data reception unit 215 receives the load data transmitted from the scale 100.

The correction coefficient calculation unit 216 treats a change amount of an output of the load cell 140 with respect to a change amount of an output of the accelerometer 280, as a correction coefficient for correcting an output of the load cell 140, based on: an output of the load cell 140 indicated by the load data received by the load data reception unit 215 and an output of the accelerometer 280 acquired by the force output acquisition unit 211, for when the smartphone 200 is attached on the scale 100 with zero load applied thereto and the scale 100 is placed in a first attitude; and an output of the load cell 140 indicated by the load data received by the load data reception unit 215 and an output of the accelerometer 280 acquired by the force output acquisition unit 211, for when the smartphone 200 is attached on the scale 100 with zero load applied thereto and the scale 100 is placed in a second attitude, which differs from the first attitude. The first attitude or the second attitude can include, for example, a horizontal attitude, a vertical attitude, an inclined attitude, or a reversed attitude.

In other words, the correction coefficient calculation unit 216 obtains a first output of the load cell 140 indicated by the load data received by the load data reception unit 215 and a second output of the accelerometer 280 acquired by the force output acquisition unit 211, for when the smartphone 200 is attached on the scale 100 with zero load applied thereto and the scale 100 is placed in a first attitude, obtains a third output of the load cell 140 indicated by the load data received by the load data reception unit 215 and a fourth output of the accelerometer 280 acquired by the force output acquisition unit 211, for when the smartphone 200 is attached on the scale 100 with zero load applied thereto and the scale I 00 is placed in a second attitude, which differs from the first attitude, and treats a difference between the third output and the first output (a change amount of an output of the load cell 140) relative to a difference between the fourth output and the second output (a change amount of an output of the accelerometer 280), as a correction coefficient for correcting an output of the load cell 140.

The correction coefficient information storage unit 217 stores information of correction coefficients calculated by the correction coefficient calculation unit 216.

The frequency determination unit 218 determines, in a case where a change occurs in the output of the accelerometer 280 at the time of weighing, whether or not the frequency of this change is smaller than a threshold value.

The normal time weighed value calculation unit 219 takes the output value of the load cell 140 as a weighed value.

The change detected time weighed value calculation unit 220, in a case where the frequency determination unit 218 determines the frequency as being smaller than the threshold value, treats a value that is calculated by subtracting, from the output value of the load cell 140, the value obtained by multiplying the output value of the accelerometer 280 by the correction coefficient calculated by the correction coefficient calculation unit 216, as a weighed value.

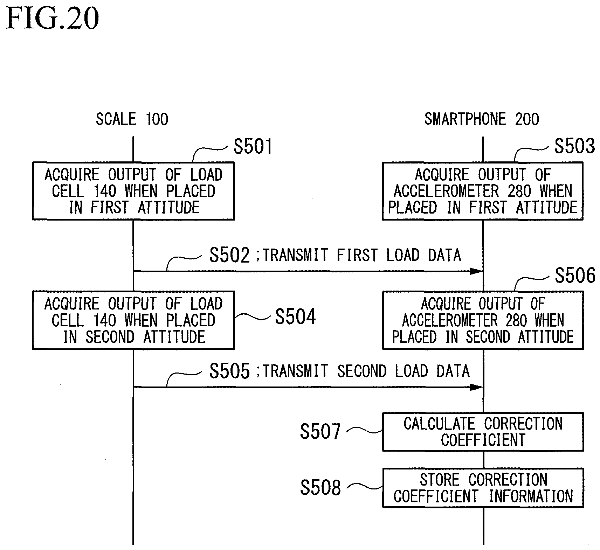

FIG. 20 shows an example of an operation sequence of the scale 100 and the smartphone 200 according to the fifth embodiment. In the description of this operation sequence, a process of setting a correction coefficient is described in detail. This operation sequence is described, with reference to FIG. 1 through FIG. 19.

When setting a correction coefficient, the operator that operates the scale 100 attaches the smartphone 200 on the attachment unit 101 of the scale 100, and connects the scale 100 and the smartphone 200 through wireless communication. The operator then switches the operation mode of the scale 100, for example, to a mode for setting a correction coefficient. Then, the operator places the scale 100 with zero load applied thereto in the first attitude, and performs, for example, a predetermined first operation to make the processor 110 of the scale 100 and the processor 210 of the smartphone 200 recognize the scale 100 as having been placed in the first attitude. As the first attitude, the operator places the scale 100 so that the load receiving unit 130 is positioned on the upper side for example. As the predetermined first operation, the operator then presses down a button provided for making the processor 110 of the scale 100 and the processor 210 of the smartphone 200 recognize the scale 100 as having been placed in the first attitude for example.

Once the predetermined first operation has been performed, the load output acquisition unit 111 of the processor 110 of the scale 100 performs a process similar to the process in step S101 of FIG. 4 to acquire an output of the load cell 140 (S501). The load output acquisition unit 111 then outputs to the load data transmission unit 126, the first load data indicating the acquired output value.

Upon receiving the first load data, the load data transmission unit 126 of the processor 110 of the scale 100 transmits the first load data to the smartphone 200 through the wireless communication subsystem 190 (S502).

On the other hand, once the predetermined first operation has been performed, the force output acquisition unit 211 of the processor 210 of the smartphone 200 performs a process similar to the process of the scale 100 in step S102 of FIG. 4 to acquire an output of the accelerometer 280 (S503). The force output acquisition unit 211 then outputs to the correction coefficient calculation unit 216, the first force data indicating the acquired output value.

Next, the operator places the scale 100 with zero load applied thereto in the second attitude, and performs, for example, a predetermined second operation to make the processor 110 of the scale 100 and the processor 210 of the smartphone 200 recognize the scale 100 as having been placed in the second attitude. As the second attitude, the operator places the scale 100 so that the load receiving unit 130 is positioned on the lower side for example. As the predetermined second operation, the operator then presses down a button provided for making the processor 110 of the scale 100 and the processor 210 of the smartphone 200 recognize the scale 100 as having been placed in the second attitude for example.

Once the predetermined second operation has been performed, the load output acquisition unit 111 of the processor 110 of the scale 100 performs a process similar to the process in step S103 of FIG. 4 to acquire an output of the load cell 140 (S504). The load output acquisition unit 111 then outputs to the load data transmission unit 126, the second load data indicating the acquired output value.

Upon receiving the second load data, the load data transmission unit 126 of the processor 110 of the scale 100 transmits the second load data to the smartphone 200 through the wireless communication subsystem 190 (S505).

On the other hand, once the predetermined second operation has been performed, the force output acquisition unit 211 of the processor 210 of the smartphone 200 performs a process similar to the process of the scale 100 in step S104 of FIG. 4 to acquire an output of the accelerometer 280 (S506). The force output acquisition unit 211 then outputs to the correction coefficient calculation unit 216, the second force data indicating the acquired output value.

Upon receiving the first load data, the first force data, the second load data, and the second force data respectively, the correction coefficient calculation unit 216 of the processor 210 of the smartphone 200 performs a process similar to the process of the scale 100 in step S105 of FIG. 4, and treats the change amount of the output of the load cell 140 with respect to the change amount of the output of the accelerometer 280 as a correction coefficient for correcting the output of the load cell 140 (S507). The correction coefficient calculation unit 216 then stores information indicating the calculated correction coefficient into the correction coefficient information storage unit 217 (S508). In this manner, a correction coefficient is set in the smartphone 200. This correction coefficient is referenced when calculating a weighed value as with the embodiments described above. In the weighing system, the accelerometer 280 of the smartphone 200 is used also when calculating a weighed value.

As described above, the scale 100 of the present embodiment acquires an output of the load cell 140. The scale 100 then transmits to the smartphone 200, the load data indicating the acquired output. On the other hand, the smartphone 200 acquires an output of the accelerometer 280.

Moreover, the smartphone 200 receives the load data transmitted from the scale 100. The smartphone 200 then treats a change amount of an output of the load cell 140 with respect to a change amount of an output of the accelerometer 280, as a correction coefficient for correcting an output of the load cell 140, based on: an output of the load cell 140 indicated by the load data received by the load data reception unit 215 and an output of the accelerometer 280 acquired by the force output acquisition unit 211, for when the smartphone 200 is attached on the scale 100 with zero load applied thereto and the scale 100 is placed in a first attitude; and an output of the load cell 140 indicated by the load data received by the load data reception unit 215 and an output of the accelerometer 280 acquired by the force output acquisition unit 211, for when the smartphone 200 is attached on the scale 100 with zero load applied thereto and the scale 100 is placed in a second attitude, which differs from the first attitude.

In this manner, according to the weighing system according to the present embodiment, it is possible to calculate the change amount of the output of the load cell 140 with respect to the change amount of the output of the accelerometer 160 as a correction coefficient for correcting the output of the load cell 140, with use of the smartphone 200, which is provided with the accelerometer 280, and without using a specialized apparatus such as one that applies a standard reference vibration to the scale 100.

The functions described can be carried out by a digital electronic circuit, computer hardware, firmware, and software, or by a combination of them. The functions, in order to execute them on a programmable processor, can be performed in steps of a method that can be executed by means of: an information carrier such as a computer program product that is realized as a tangible object on a device-readable memory device; and a programmable processor that executes command programs for executing the embodiments described above by operating input data and generating an output. Furthermore, alternatively, program commands may be artificially generated propagating signals such as electric, optic, or electromagnetic signals generated by a device, and, in order for the program commands to be executed on a programmable processor, the program commands may be encoded into signals generated to encode information to be transmitted to an appropriate receiver device.

The functions described above can be suitably carried out by means of one or more computer programs that can be executed on a programmable system that includes one or more programmable processors that transmits and receives data and commands between a data storage system, at least one input device, and at least one output device. The computer program is a set of commands that can be used to directly or indirectly execute predetermined operations by means of a computer, and obtain predetermined results. The computer program can be coded in a programming language of an arbitrary format including compiling language and interpreter language, and may be arranged in an arbitrary format including a standalone program, module, component, sub-routine, and another unit suitable to be used in a computing environment.

Examples of the processor that is suitable for command program execution include both general purpose and specific purpose microprocessors and a single or a plurality of processors or cores of a computer of an arbitrary type. In general, a processor receives commands and data from at least either a dedicated memory for reading commands and data or a random access memory. Basic components of the computer are a processor for executing commands, and one or more memories for storing commands and data. Generally, the computer may further include or be operatively connected to one or more high capacity memory storage devices including a magnetic disk, a magnetic optical disk, and an optical disk such as a built-in hard disk and removable disk. Examples of the memory storage device suitable for tangibly realizing computer program commands and data include a semiconductor memory device such as EPROM (erasable programmable read only memory), EEPROM (electrically erasable and programmable read only memory), and flash memory device, and a nonvolatile memory of an arbitrary format such as a CD-ROM (compact disk read only memory) disk and a DVD-ROM (digital versatile disk read only memory) disk. The processor and memory may use a plurality of ASICs (application specific integrated circuit) for subserving purposes, or may be embedded in an ASIC.

In order to provide interaction with the user, it may be executed on a computer that has a display device for displaying information to the user such as a CRT (cathode ray tube) monitor and an LCD (liquid crystal display) monitor, a keyboard that enables the user to make input to the computer, and a pointing device such as a mouse and track ball.

The functions can be performed by means of a computer system that includes back-end components such as a data server, a computer system that includes middleware components such as an application server and an Internet server, or a computer system that includes front-end components such as a client computer having a graphical user interface, an Internet browser, or a combination of these. The constituents of the system may be connected via digital data communication of an arbitrary format or medium such as a communication network. Examples of the communication network include LAN (local area network), WAN (wide area network), and computers and networks that form the Internet.

The computer system can include a client and a server. The client and the server are usually remote each other, and communicate with each other typically through a network. The relationship between the client and the server is realized by computer programs running on the respective computers, mutually forming a client-server relationship.

One or more functions and steps of the above embodiment may be implemented, using an API (application program interface). An API can provide a service, provide data, and define one or more parameters that are exchanged between a calling application that executes operations and calculations, and other software codes.

The API may be implemented as one or more calls within the parameter list based on the calling method defined in the API specification documentation, or within a program code that transmits or receives one or more parameters through another structure. The parameters may be constants, keys, data structures, objects, object classes, variables, data types, pointers, matrixes, lists, or other calls. API calls and parameters may be implemented by means of an arbitrary programming language. A programming language can define vocabularies and calling methods used by a programmer in order to access functions that support an API.

In a given embodiment, an API call can report the ability of the device that is executing the application to an application.

## Claims

1. A weighing apparatus for weighing a mass of an object, the apparatus comprising:

a main body (100);
a load receiving device (130) provided at the main body (100) to receive a load;
a load detection device (140) provided to detect a load acting on the load receiving device (130);
an acting force detection device (160) provided to detect a force that is acting on the main body (100) and that differs from the load acting on the load receiving device (130); and
a data processing device (110) configured to data-process an output of the load detection device as a weighed value in a mass unit,
the data processing device (110) having:

a load output acquisition unit (111)configured to acquire an output of the load detection device;
a force output acquisition unit (112) configured to acquire an output of the acting force detection device (160);

**characterized in that**
the apparatus further comprises a correction coefficient calculation unit (216) configured to calculate a correction coefficient for correcting an output of the load detection device (140) by calculating a change amount of an output of the load output acquisition unit (111) with respect to a change amount of an output of the acting force detection device (160) based on first outputs of the load detection device (140) and the acting force detection device (160), and second outputs of the load detection device (140) and the acting force detection device (160);
the first outputs are acquired respectively by the load output acquisition unit (111) and the force output acquisition unit (112) when the main body (100) with no load of the object applied thereto is placed in a first attitude,
the second outputs of the load detection device (140) and the acting force detection device (160) are acquired respectively by the load output acquisition unit (111) and the force output acquisition unit (112) when the main body (100) with no load of the object applied thereto is placed in a second attitude,
the first attitude and the second attitude are different from each other, and
the first outputs and the second outputs are acquired in different timing.

2. The weighing apparatus according to Claim 1, wherein

the data processing device (110) further has:

a frequency determination unit (115) that, in a case where a change occurs in an output of the acting force detection device (160) at the time of weighing, determines whether or not a frequency of the change is smaller than a threshold value; and
a change detected time weighed value calculation unit (117) that, in a case where the frequency determination unit (115) determines the frequency as being smaller than the threshold value, treats a value that is calculated by subtracting, from an output of the load detection device (140), a value obtained by multiplying an output of the acting force detection device (160) by a correction coefficient calculated by the correction coefficient calculation unit (216), as a weighed value.

3. The weighing apparatus according to Claim 1 or 2, wherein
the data processing device (110) further has:

an output difference determination unit (120) that determines whether or not an output difference between an output of the acting force detection device (160) when a display is automatically set to zero without intervention of an operator, and an output of the acting force detection device (160) at a time of weighing, is within an acceptable value; and
an output difference detected time weighed value calculation unit (121) that, in a case where the output difference determination unit (120) determines the output difference as not being within the acceptable value, treats a value that is calculated by subtracting from an output of the load detection device (140), a value obtained by multiplying the output difference by a correction coefficient calculated by the correction coefficient calculation unit (216), as a weighed value.

4. The weighing apparatus according to any one of Claims 1 to 3, wherein
the data processing device (110) further has:

a span coefficient calculation unit (123) that treats as a span coefficient of the load detection device (140) after shipment, a value that is calculated by multiplying a value obtained by dividing a correction coefficient calculated after shipment by the correction coefficient calculation unit (216) by a correction coefficient calculated before shipment by the correction coefficient calculation unit (216), by a span coefficient of the load detection unit obtained before shipment.

5. The weighing apparatus according to any one of Claims 1 to 4, wherein at least one of the acting force detection device (160), the load output acquisition unit (111), the force output acquisition unit (112), and the correction coefficient calculation unit (216) of the data processing device (110) is provided at another body that is different from the main body (100).

6. The weighing apparatus according to Claim 5, wherein
the acting force detection device (160) is provided at the another body,
the another body is attachably and detachably provided with respect to the main body (100), and
the acting force detection device (160) detects, while the another body is attached on the main body (100), the force that is acting on the main body (100) and that differs from the load acting on the load receiving device (130).

7. The weighing apparatus according to Claim 6, wherein the another body is a portable information terminal (200).

8. The weighing apparatus according to claim 1 comprising a portable information terminal (200),
wherein the portable information terminal (200) comprises the acting force detection device (160);
wherein the load output acquisition unit (111) is provided at the main body of the weighing apparatus (100);
wherein the force output acquisition unit (112) is provided at the portable information terminal (200); and
wherein the correction coefficient calculation unit (216) is provided at the main body of the weighing apparatus (100) or at the portable information terminal (200).

9. The weighing apparatus according to Claim 8, wherein
the apparatus is arranged such that the portable information terminal (200) is attachably and detachably provided with respect to the main body of the weighing apparatus (100), and
the acting force detection device (160) is arranged to detect, while the portable information terminal (200) is attached on the main body of the weighing apparatus (100), the force that is acting on the main body of the weighing apparatus (100) and that differs from the load acting on the load receiving unit (130).

10. The weighing apparatus according to Claim 8 or 9, wherein
the portable information terminal (200) further comprises a force data transmission unit (212) configured to transmit to the main body of the weighing apparatus(100), force data indicating an output acquired by the force output acquisition unit (112), the main body of the weighing apparatus (100) further comprises a force data reception unit (124) configured to receive the force data transmitted from the portable information terminal (200), and the correction coefficient calculation unit (216) is provided at the main body of the weighing apparatus.

11. The weighing apparatus according to Claim 8 or 9, wherein
the main body of the weighing apparatus (100) further comprises a load data transmission unit (126) that transmits to the portable information terminal (200), load data indicating the output acquired by the load output acquisition unit (111), the portable information terminal (200) further comprises a load data reception unit (215) that receives the load data transmitted from the main body of the weighing apparatus (100), and the correction coefficient calculation unit (216) is provided at the portable information terminal (200).

12. A weighing method for weighing a mass of an object, the method comprising:

> (a) acquiring an output of a load detection device (140) that is provided at a body of a weighing apparatus (100) for detecting a load acting on a load receiving device (130) of the body;
> (b) acquiring an output of an acting force detection device (160) that is provided for detecting a force that is acting on the body and that differs from a load that is acting on the load receiving device (130),

> **characterized in that**
> the method further comprises:

> (c) calculating, as a correction coefficient for correcting an output of the load detection device (140), a change amount of an output of the load detection device (140) with respect to a change amount of an output of the acting force detection device (160) based on first outputs of the load detection device (140) and the acting force detection device (160), and second outputs of the load detection device (140) and the acting force detection device (160);

> the first outputs are acquired respectively in the step (a) and the step (b) when the body with no load of the object applied thereto is placed in a first attitude, the second outputs are acquired respectively in the step (a) and the step (b) when the body with no load of the object applied thereto is placed in a second attitude,
> the first attitude and the second attitude are different from each other, and
the first outputs are the second outputs are acquired in different timing.

13. The weighing method according to Claim 12, wherein
the output of the load detection device (140) is acquired by means of a weighing apparatus (100), the output of the acting force detection device (160) is acquired by means of a portable information terminal (200) that is attachably and detachably provided with respect to the body of the weighing apparatus (100) and that is provided with the acting force detection device (160), the method further comprises:

> (d) transmitting force data showing the output of the acting force detection device (160) acquired in the step (b), to the weighing apparatus (100) by means of the portable information terminal (200); and
> (e) receiving the force data transmitted from the portable information terminal (200), by means of the weighing apparatus (100), and
> in the step (c), by means of the weighing apparatus (100), as the correction coefficient, a change amount of the output of the load detection device (140) with respect to a change amount of the output of the acting force detection device (160) is calculated based on (i) an output of the load detection device (140) that is acquired in the step (a) and an output of the acting force detection device (160) that is shown by the force data received in the step (d), when the portable information terminal (200) is attached on the body with zero load applied thereto and the body is placed in a first attitude and (ii) an output of the load detection device (140) that is acquired in the step (a) and an output of the acting force detection device (160) that is shown by the force data received in the step (d), when the portable information terminal (200) is attached on the body with zero load applied thereto and the body is placed in a second attitude, which differs from the first attitude.

14. The weighing method according to Claim 12, wherein
the output of the load detection device (140) is acquired by means of the weighing apparatus (100), the output of the acting force detection device (160) is acquired by means of a portable information terminal (200) that is attachably and detachably provided with respect to the body of the weighing apparatus (100) and that is provided with the acting force detection device (160), the method further comprises:

(d) by means of the weighing apparatus (100), transmitting load data indicating the output acquired in the step (a) to the portable information terminal (200); and

(e) receiving the load data transmitted from the weighing apparatus (100), by means of the portable information terminal (200), and

in the step (c), by means of the portable information terminal (200), as the correction coefficient, a change amount of the output of the load detection device (140) with respect to a change amount of the output of the acting force detection device (160) is calculated based on (i) an output of the load detection device (140) that is shown by the load data received in the step (d) and an output of the acting force detection device (160) that is acquired in the step (c), when the portable information terminal (200) is attached on the body with zero load applied thereto and the body is placed in a first attitude and (ii) an output of the load detection device (140) that is shown by the load data received in the step (d) and an output of the acting force detection device (160) that is acquired in the step (c), when the portable information terminal (200) is attached on the body with zero load applied thereto and the body is placed in a second attitude, which differs from the first attitude.

15. A program that causes a computer to function as a weighing apparatus (100) that weighs a mass of an object,

the program causing the computer to function as:

a load output acquisition unit (111) that acquires an output of a load detection device (140) that is provided at a body of the weighing apparatus (100) for detecting a load acting on a load receiving device (130) of the body;

a force output acquisition unit (112) that acquires an output of an acting force detection device (160) that is provided for detecting a force that is acting on the body and that differs from a load that is acting on the load receiving device (130); and

a correction coefficient calculation unit (216) that calculates, as a correction coefficient for correcting an output of the load detection device (140), a change amount of an output of the load detection device (140) with respect to a change amount of an output of the acting force detection device (160) based on (i) first outputs of the load detection device (140) and the acting force detection device (160), and and (ii) second outputs of the load detection device (140) and the acting force detection device (160),

wherein the first outputs are acquired respectively by the load output acquisition unit (111) and the force output acquisition unit (112) when the main body (100) with no load of the object applied thereto is placed in a first attitude,

wherein the second outputs are acquired respectively by the load output acquisition unit (111) and the force output acquisition unit (112) when the main body (100) with no load of the object applied thereto is placed in a second attitude,

wherein the first attitude and the second attitude are different from each other, and

wherein the first outputs and the second outputs are acquired in different timing.

## Patentansprüche

1. Wiegevorrichtung zum Wiegen einer Masse eines Objektes, wobei die Vorrichtung umfasst:

einen Hauptkörper (100);
eine Last-Aufnahmeeinrichtung (130), die an dem Hauptkörper (100) zum Aufnehmen einer Last vorhanden ist;
eine Last-Feststellungseinrichtung (140), die zum Feststellen einer auf die Last-Aufnahmeeinrichtung (130) wirkenden Last vorhanden ist;
eine Einrichtung (160) zur Feststellung einer wirkenden Kraft, die vorhanden ist, um eine Kraft festzustellen, die auf den Hauptkörper (100) wirkt und die sich von der Last unterscheidet, die auf die Last-Aufnahmeeinrichtung (130) wirkt; sowie
eine Datenverarbeitungseinrichtung (110), die so konfiguriert ist, dass sie Datenverarbeitung eines Ausgangs der Last-Feststellungseinrichtung als einen gewogenen Wert in einer Masse-Einheit durchführt,
wobei die Datenverarbeitungseinrichtung (110) aufweist:

eine Einheit (111) zur Erfassung eines Last-Ausgangs, die so konfiguriert ist, dass sie einen Ausgang der Last-Feststellungseinrichtung erfasst;
eine Einheit (112) zur Erfassung eines Kraft-Ausgangs, die so konfiguriert ist, dass sie einen Ausgang der Einrichtung (160) zur Feststellung einer wirkenden Kraft erfasst;
**dadurch gekennzeichnet, dass**
die Vorrichtung des Weiteren eine Einheit (216) zur Berechnung eines Korrektur-Koeffizienten umfasst, die so konfiguriert ist, dass sie einen Korrektur-Koeffizienten zum Korrigieren eines Ausgangs der Last-Feststellungseinrichtung (140) berechnet, indem sie einen Änderungsbetrag eines Ausgangs der Einheit (111) zur Erfassung eines Last-Ausgangs in Bezug auf einen Änderungsbetrag eines Ausgangs der Einrichtung (160) zur Feststellung einer wirkenden Kraft auf Basis erster Ausgänge der Last-Feststellungseinrichtung (140) sowie der Einrichtung (160) zur Feststellung einer wirkenden Kraft und zweiter Ausgänge der Last-Feststellungseinrichtung (140) sowie der Einrichtung (160) zur Feststellung einer wirkenden Kraft berechnet;

wobei die ersten Ausgänge jeweils durch die Einheit (111) zur Erfassung eines Last-Ausgangs sowie die Einheit (112) zur Erfassung eines Kraft-Ausgangs erfasst werden, wenn der Hauptkörper (100) ohne darauf wirkende Last des Objektes eine erste Stellung einnimmt,

die zweiten Ausgänge der Last-Feststellungseinrichtung (140) und der Einrichtung (160) zur Feststellung einer wirkenden Kraft durch die Einheit (111) zur Erfassung eines Last-Ausgangs bzw. die Einheit (112) zur Erfassung eines Kraft-Ausgangs erfasst werden, wenn der Hauptkörper (100) ohne darauf wirkende Last des Objektes eine zweite Stellung einnimmt,

wobei sich die erste Stellung und die zweite Stellung voneinander unterscheiden, und die ersten Ausgänge und die zweiten Ausgänge zu unterschiedlichen Zeiten erfasst werden.

2. Wiegevorrichtung nach Anspruch 1, wobei die Datenverarbeitungseinrichtung (110) des Weiteren aufweist:

eine Einheit (115) zur Bestimmung von Häufigkeit, die, wenn beim Wiegen eine Änderung eines Ausgangs der Einrichtung (160) zur Feststellung einer wirkenden Kraft auftritt, bestimmt, ob eine Häufigkeit der Änderung unter einem Schwellenwert liegt oder nicht; sowie eine Einheit (117) zur Berechnung eines gewogenen Wertes bei erfasster Änderung, die, wenn die Einheit (115) zur Bestimmung von Häufigkeit bestimmt, dass die Häufigkeit unter dem Schwellenwert liegt, einen Wert, der berechnet wird, indem von einem Ausgang der Last-Feststellungseinrichtung (140) ein Wert subtrahiert wird, der ermittelt wird, indem ein Ausgang der Einrichtung (160) zur Feststellung einer wirkenden Kraft mit einem durch die Einheit (216) zur Berechnung eines Korrektur-Koeffizienten berechneten Korrektur-Koeffizienten multipliziert wird, als einen gewogenen Wert behandelt.

3. Wiegevorrichtung nach Anspruch 1 oder 2, wobei die Datenverarbeitungseinrichtung (110) des Weiteren aufweist:

ren aufweist:

eine Einheit (120) zur Bestimmung von Ausgangs-Differenz, die bestimmt, ob eine Ausgangs-Differenz zwischen einem Ausgang der Einrichtung (160) zur Feststellung einer wirkenden Kraft beim automatischen Zurücksetzen einer Anzeige auf Null ohne Eingriff einer Bedienungsperson und einem Ausgang der Einrichtung (160) zur Feststellung einer wirkenden Kraft beim Wiegen innerhalb eines akzeptablen Wertes liegt; und

eine Einheit (121) zur Berechnung eines gewogenen Wertes bei erfasster Ausgangs-Differenz, die, wenn die Einheit (120) zur Bestimmung von Ausgangs-Differenz bestimmt, dass die Ausgangsdifferenz nicht innerhalb des akzeptablen Wertes liegt, einen Wert, der berechnet wird, indem von einem Ausgang der Last-Feststellungseinrichtung (140) ein Wert subtrahiert wird, der ermittelt wird, indem die Ausgangs-Differenz mit einem durch die Einheit (216) zur Berechnung eines Korrektur-Koeffizienten berechneten Korrektur-Koeffizienten multipliziert wird, als einen gewogenen Wert behandelt.

4. Wiegevorrichtung nach einem der Ansprüche 1 bis 3, wobei die Datenverarbeitungseinrichtung (110) des Weiteren aufweist:

eine Einheit (123) zur Berechnung eines Spannen-Koeffizienten, die als einen Spannen-Koeffizienten der Last-Feststellungseinrichtung (140) nach Auslieferung einen Wert behandelt, der berechnet wird, indem ein Wert, der ermittelt wird, indem ein durch die Einheit (216) zur Berechnung eines Korrektur-Koeffizienten nach Auslieferung berechneter Korrektur-Koeffizient durch einen durch die Einheit (216) zur Berechnung eines Korrektur-Koeffizienten vor Auslieferung berechneten Korrektur-Koeffizienten dividiert wird, mit einem vor Auslieferung ermittelten Spannen-Koeffizienten der Last-Feststellungseinheit multipliziert wird.

5. Wiegevorrichtung nach einem der Ansprüche 1 bis 4, wobei sich die Einrichtung (160) zur Feststellung einer wirkenden Kraft, die Einheit (111) zur Erfassung von Last-Ausgang, die Einheit (112) zur Erfassung von Kraft-Ausgang oder/und die Einheit (216) zur Berechnung eines Korrektur-Koeffizienten der Datenverarbeitungseinrichtung (110) an einem anderen Körper befindet/befinden, der sich von dem Hauptkörper (100) unterscheidet.

6. Wiegevorrichtung nach Anspruch 5, wobei

die Vorrichtung (160) zur Feststellung einer wirkenden Kraft an dem anderen Körper vorhanden ist, der andere Körper an dem Hauptkörper (100) angebracht und von ihm entfernt werden kann, und die Einrichtung (160) zur Feststellung einer wirkenden Kraft, wenn der andere Körper an dem Hauptkörper (100) angebracht ist, die Kraft feststellt, die auf den Hauptkörper (100) wirkt und die sich von der auf die Last-Aufnahmeeinrichtung (130) wirkenden Last unterscheidet.

7. Wiegevorrichtung nach Anspruch 6, wobei der andere Körper ein tragbares Informations-Endgerät (200) ist.

8. Wiegevorrichtung nach Anspruch 1, die ein tragbares Informations-Endgerät (200) umfasst, wobei das tragbare Informations-Endgerät (200) die Einrichtung (160) zur Feststellung einer wirkenden Kraft umfasst; die Einheit (111) zur Erfassung von Last-Ausgang an dem Hauptkörper der Wiegevorrichtung (100) vorhanden ist; die Einheit (112) zur Erfassung von Kraft-Ausgang an dem tragbaren Informations-Endgerät (200) vorhanden ist; und die Einheit (216) zur Berechnung eines Korrektur-Koeffizienten an dem Hauptkörper der Wiegevorrichtung (100) oder an dem tragbaren Informations-Endgerät (200) vorhanden ist.

9. Wiegevorrichtung nach Anspruch 8, wobei die Vorrichtung so eingerichtet ist, dass das tragbare Informations-Endgerät (200) an dem Hauptkörper der Wiegevorrichtung (100) angebracht und von ihm entfernt werden kann, und die Einrichtung (160) zur Feststellung einer wirkenden Kraft so eingerichtet ist, dass sie, wenn das tragbare Informations-Endgerät (200) an dem Hauptkörper der Wiegevorrichtung (100) angebracht ist, die Kraft feststellt, die auf den Hauptkörper der Wiegevorrichtung (100) wirkt und die sich von der auf die Last-Aufnahmeeinheit (130) wirkenden Last unterscheidet.

10. Wiegevorrichtung nach Anspruch 8 oder 9, wobei das tragbare Informations-Endgerät (200) des Weiteren eine Einheit (212) zum Senden von Kraft-Daten umfasst, die so konfiguriert ist, dass sie Kraft-Daten, die einen durch die Einheit (112) zur Erfassung eines Kraft-Ausgangs erfassten Ausgang anzeigen, zu dem Hauptkörper der Wiegevorrichtung (100) sendet, der Hauptkörper der Wiegevorrichtung (100) des Weiteren eine Einheit (124) zum Empfangen von Kraft-Daten umfasst, die so konfiguriert ist, dass sie die von dem tragbaren Informations-Endgerät (200) gesendeten Kraft-Daten empfängt, und

die Einheit (216) zur Berechnung eines Korrektur-Koeffizienten an dem Hauptkörper der Wiegevorrichtung vorhanden ist.

11. Wiegevorrichtung nach Anspruch 8 oder 9, wobei der Hauptkörper der Wiegevorrichtung (100) des Weiteren eine Einheit (126) zum Senden von Last-Daten umfasst, die Last-Daten, die den durch die Einheit (111) zur Erfassung eines Last-Ausgangs erfassten Ausgang anzeigen, zu dem tragbaren Informations-Endgerät (200) sendet, das tragbare Informations-Endgerät (200) des Weiteren eine Einheit (215) zum Empfangen von Last-Daten umfasst, die die von dem Hauptkörper der Wiegevorrichtung (100) gesendeten Last-Daten empfängt, und die Einheit (216) zur Berechnung eines Korrektur-Koeffizienten an dem tragbaren Informations-Endgerät (200) vorhanden ist.

12. Wiegeverfahren zum Wiegen einer Masse eines Objektes, wobei das Verfahren umfasst:

a) Erfassen eines Ausgangs einer Last-Feststellungseinrichtung (140), die sich an einem Körper einer Wiegevorrichtung (100) befindet, um eine auf eine Last-Aufnahmeeinrichtung (130) des Körpers wirkende Last festzustellen;
b) Erfassen eines Ausgangs einer Einrichtung (160) zur Feststellung einer wirkenden Kraft, die zum Feststellen einer Kraft dient, die auf den Körper wirkt und die sich von einer Last unterscheidet, die auf die Last-Aufnahmeeinrichtung (130) wirkt,

**dadurch gekennzeichnet, dass**
das Verfahren des Weiteren umfasst:

c) Berechnen eines Änderungsbetrages eines Ausgangs der Last-Feststellungseinrichtung (140) in Bezug auf einen Änderungsbetrag eines Ausgangs der Einrichtung (160) zur Feststellung einer wirkenden Kraft auf Basis erster Ausgänge der Last-Feststellungseinrichtung (140) sowie der Einrichtung (160) zur Feststellung einer wirkenden Kraft und zweiter Ausgänge der Last-Feststellungseinrichtung (140) sowie der Einrichtung (160) zur Feststellung einer wirkenden Kraft als einen Korrektur-Koeffizienten zum Korrigieren eines Ausgangs der Last-Feststellungseinrichtung (140);

wobei die ersten Ausgänge jeweils in dem Schritt a) und dem Schritt b) erfasst werden, wenn der Hauptkörper (100) ohne darauf wirkende Last des Objektes eine erste Stellung einnimmt, die zweiten Ausgänge jeweils in dem Schritt a) und dem Schritt b) erfasst werden, wenn der Hauptkörper ohne darauf wirkende Last des Objektes eine zweite Stellung einnimmt,
wobei sich die erste Stellung und die zweite Stellung voneinander unterscheiden, und
die ersten Ausgänge und die zweiten Ausgänge zu unterschiedlichen Zeiten erfasst werden.

13. Wiegeverfahren nach Anspruch 12, wobei
der Ausgang der Last-Feststellungseinrichtung (140) mittels einer Wiegevorrichtung (100) erfasst wird,
der Ausgang der Einrichtung (160) zur Feststellung einer wirkenden Kraft mittels eines tragbaren Informations-Endgerätes (200) erfasst wird, das an dem Körper der Wiegevorrichtung angebracht und von ihm entfernt werden kann und das mit der Einrichtung (160) zur Feststellung einer wirkenden Kraft versehen ist,
und das Verfahren des Weiteren umfasst:

   d) Senden von Kraft-Daten, die den in dem Schritt b) erfassten Ausgang der Einrichtung (160) zur Feststellung einer wirkenden Kraft zeigen, zu der Wiegevorrichtung (100) mittels des tragbaren Informations-Endgerätes (200); und
   e) Empfangen der von dem tragbaren Informations-Endgerät (200) gesendeten Kraft-Daten mittels der Wiegevorrichtung (100), und

in dem Schritt c) mittels der Wiegevorrichtung (100) als der Korrektur-Koeffizient ein Änderungsbetrag des Ausgangs der Last-Feststellungseinrichtung (140) in Bezug auf einen Änderungsbetrag des Ausgangs der Einrichtung (160) zur Feststellung einer wirkenden Kraft auf Basis 1) eines Ausgangs der Last-Feststellungseinrichtung (140), der in dem Schritt a) erfasst wird, sowie eines Ausgangs der Einrichtung (160) zur Feststellung einer wirkenden Kraft, der mit den in dem Schritt d) empfangenen Kraft-Daten gezeigt wird, wenn das Informations-Endgerät (200) an dem Körper angebracht ist und Null Last darauf wirkt und der Körper eine erste Stellung einnimmt, und 2) eines Ausgangs der Last-Feststellungseinrichtung (140), der in dem Schritt a) erfasst wird, sowie eines Ausgangs der Einrichtung (160) zur Feststellung einer wirkenden Kraft, der durch die in dem Schritt d) empfangenen Kraft-Daten gezeigt wird, wenn das tragbare Informations-Endgerät (200) an dem Körper angebracht ist und Null Last darauf wirkt, und der Körper eine zweite Stellung einnimmt, die sich von der ersten Stellung unterscheidet, berechnet wird.

14. Wiegeverfahren nach Anspruch 12, wobei
der Ausgang der Last-Feststellungseinrichtung (140) mittels der Wiegevorrichtung (100) erfasst wird,
der Ausgang der Einrichtung (160) zur Feststellung einer wirkenden Kraft mittels eines tragbaren Informations-Endgerätes (200) erfasst wird, das an dem Körper der Wiegevorrichtung (100) angebracht und von ihm entfernt werden kann und das mit der Einrichtung (160) zur Feststellung einer wirkenden Kraft versehen ist,
und das Verfahren des Weiteren umfasst:

   d) Senden von Last-Daten, die den in dem Schritt a) erfassten Ausgang anzeigen, mittels der Wiegevorrichtung (100) zu dem tragbaren Informations-Endgerät (200); und
   e) Empfangen der von der Wiegevorrichtung (100) gesendeten Last-Daten mittels des tragbaren Informations-Endgerätes (200), und

in dem Schritt c) mittels des tragbaren Informations-Endgerätes (200) als der Korrektur-Koeffizient ein Änderungsbetrag des Ausgangs der Last-Feststellungseinrichtung (140) in Bezug auf einen Änderungsbetrag des Ausgangs der Einrichtung (160) zur Feststellung einer wirkenden Kraft auf Basis 1) eines Ausgangs der Last-Feststellungseinrichtung (140), der durch die in dem Schritt d) empfangenen Last-Daten gezeigt wird, sowie eines Ausgangs der Einrichtung (160) zur Feststellung einer wirkenden Kraft, der in dem Schritt c) erfasst wird, wenn das tragbare Informations-Endgerät (200) an dem Körper angebracht ist und Null Last darauf wirkt und der Körper eine erste Stellung einnimmt, und 2) eines Ausgangs der Last-Feststellungseinrichtung (140), der durch die in dem Schritt d) empfangenen Last-Daten gezeigt wird, sowie eines Ausgangs der Einrichtung (160) zur Feststellung einer wirkenden Kraft, der in dem Schritt c) erfasst wird, wenn das tragbare Informations-Endgerät (200) an dem Körper angebracht ist und Null Last darauf wirkt, und der Körper eine zweite Stellung einnimmt, die sich von der ersten Stellung unterscheidet, berechnet wird.

15. Programm, das einen Computer veranlasst, als eine Wiegevorrichtung (100) zu arbeiten, die eine Masse eines Objektes wiegt,
wobei das Programm den Computer veranlasst, zu arbeiten als:

   eine Einheit (111) zur Erfassung eines Last-Ausgangs, die einen Ausgang einer Last-Feststellungseinrichtung (140) erfasst, die an einem Körper der Wiegevorrichtung (100) zum Feststellen einer auf eine Last-Aufnahmeeinrichtung (130) des Körpers wirkenden Last vorhanden ist;
   eine Einheit (112) zur Erfassung eines Kraft-Ausgangs, die einen Ausgang einer Einrichtung (160) zur Feststellung einer wirkenden Kraft erfasst, die vorhanden ist, um eine Kraft festzustellen, die auf den Körper wirkt und die sich von einer Last unterscheidet, die auf die Last-Aufnahmeeinrichtung (130) wirkt; sowie

eine Einheit (216) zur Berechnung eines Korrektur-Koeffizienten, die als einen Korrektur-Koeffizienten zum Korrigieren eines Ausgangs der Last-Feststellungseinrichtung (140) einen Änderungsbetrag eines Ausgangs der Last-Feststellungseinrichtung (140) in Bezug auf einen Änderungsbetrag eines Ausgangs der Einrichtung (160) zur Feststellung einer wirkenden Kraft auf Basis 1) erster Ausgänge der Last-Feststellungseinrichtung (140) sowie der Einrichtung (160) zur Feststellung einer wirkenden Kraft und 2) zweiter Ausgänge der Last-Feststellungseinrichtung (140) sowie der Einrichtung (160) zur Feststellung einer wirkenden Kraft berechnet,

wobei die ersten Ausgänge jeweils durch die Einheit (111) zur Erfassung eines Last-Ausgangs sowie die Einheit (112) zur Erfassung eines Kraft-Ausgangs erfasst werden, wenn der Hauptkörper (100) ohne darauf wirkende Last des Objektes eine erste Stellung einnimmt,

die zweiten Ausgänge durch die Einheit (111) zur Erfassung eines Last-Ausgangs bzw. die Einheit (112) zur Erfassung eines Kraft-Ausgangs erfasst werden, wenn der Hauptkörper (100) ohne darauf wirkende Last des Objektes eine zweite Stellung einnimmt,

wobei sich die erste Stellung und die zweite Stellung voneinander unterscheiden, und

die ersten Ausgänge und die zweiten Ausgänge zu unterschiedlichen Zeiten erfasst werden.

## Revendications

1. Appareil de pesage permettant de peser la masse d'un objet, l'appareil comprenant :

un corps principal (100),
un dispositif de réception de charge (130) placé sur le corps principal (100) pour recevoir une charge,
un dispositif de détection de charge (140) prévu pour détecter une charge agissant sur le dispositif de réception de charge (130),
un dispositif de détection de force agissante (160) prévu pour détecter une force qui agit sur le corps principal (à) et qui diffère de la charge agissant sur le dispositif de réception de charge (130), et
un dispositif de traitement de données (110) configuré pour traiter les données de la sortie du dispositif de détection de charge comme valeur pesée en une unité de masse,
le dispositif de traitement de données (110) comportant :

une unité d'acquisition de sortie de charge (111) configurée pour acquérir la sortie du dispositif de détection de charge,
une unité d'acquisition de sortie de force (112) configurée pour acquérir la sortie du dispositif de détection de force agissante (160),
**caractérisé en ce que**
l'appareil comprend en outre une unité de calcul de coefficient de correction (216) configurée pour calculer un coefficient de correction permettant de corriger la sortie du dispositif de détection de charge (140) en calculant la valeur de changement de la sortie de l'unité d'acquisition de sortie de charge (111) par rapport à la valeur de changement de la sortie du dispositif de détection de force agissante (160) sur la base de premières sorties du dispositif de détection de charge (140) et du dispositif de détection de force agissante (160), et de secondes sorties du dispositif de détection de charge (140) et du dispositif de détection de force agissante (160),
les premières sorties sont acquises respectivement par l'unité d'acquisition de sortie de charge (111) et l'unité d'acquisition de sortie de force (112) lorsque le corps principal (100), sans charge appliquée de l'objet, est placé dans une première attitude,
les secondes sorties du dispositif de détection de charge (140) et du dispositif de détection de force agissante (160) sont acquises respectivement par l'unité d'acquisition de sortie de charge (111) et l'unité d'acquisition de sortie de force (112) lorsque le corps principal (100), sans charge appliquée de l'objet, est placé dans une seconde attitude,
la première et la seconde attitude étant différentes l'une de l'autre, et
les premières et les secondes sorties étant acquises lors de différents séquencements.

2. Appareil de pesage selon la revendication 1, dans lequel
le dispositif de traitement de données (110) comporte en outre :

une unité de détermination de fréquence (115) qui détermine, dans le cas où une modification se produit dans la sortie du dispositif de détection de force agissante (160) à l'instant du pesage, si la fréquence de la modification est ou non plus petite qu'une valeur de seuil, et
une unité de calcul de valeur de pesée à l'instant détecté de modification (117) qui traite une valeur, dans le cas où l'unité de détermination de fréquence (115) a déterminé que la fréquence est plus petite que la valeur de seuil, qui est calculée en tant que valeur pesée en soustrayant, de la sortie du dispositif de détection de charge (140), une valeur obtenue en multipliant la sortie du dispositif de détection de force agissante (160) par un coefficient de correction calculé par l'unité de calcul de coefficient de correction (216).

3. Appareil de pesage selon la revendication 1 ou la revendication 2, dans lequel
le dispositif de traitement de données (110) comporte en outre :

une unité de détermination de différence de sorties (120) qui détermine si une différence de sorties entre la sortie du dispositif de détection de force agissante (160), lorsque l'affichage est automatiquement fixé à zéro sans intervention d'un opérateur, et la sortie du dispositif de détection de force agissante (160), à l'instant du pesage, se trouve dans une plage de valeurs acceptables, et
une unité de calcul de valeur pesée à l'instant détecté de différence de sorties (121) qui traite comme valeur pesée une valeur, dans un cas où l'unité de détermination de différence de sorties (120) a déterminé que la différence des sorties ne se trouve pas dans les valeurs acceptables, laquelle est calculée en soustrayant de la sortie du dispositif de détection de charge (140) une valeur obtenue en multipliant la différence de sorties par un coefficient de correction calculé par l'unité de calcul de coefficient de correction (216).

4. Appareil de pesage selon l'une quelconque des revendications 1 à 3, dans lequel
le dispositif de traitement de données (110) comprend en outre :

une unité de calcul de coefficient d'intervalle (123) qui traite en tant que coefficient d'intervalle du dispositif de détection de charge (140) après transfert, une valeur qui est calculée en multipliant une valeur obtenue en divisant un coefficient de correction calculé après transfert par l'unité de calcul de coefficient de correction (216) par un coefficient de correction calculé avant transfert par l'unité de calcul de coefficient de correction (216), par un coefficient d'intervalle de l'unité de détection de charge, obtenu avant le transfert.

5. Appareil de pesage selon l'une quelconque des revendications 1 à 4, dans lequel au moins l'un du dispositif de détection de force agissante (160), de l'unité d'acquisition de sortie de charge (111), de l'unité d'acquisition de sortie de force (112) et de l'unité de calcul de coefficient de correction (216) du dispositif de traitement de données (110) est placé sur un autre corps qui est différent du corps principal (100).

6. Appareil de pesage selon la revendication 5, dans lequel
le dispositif de détection de force agissante (160) est placé au niveau de l'autre corps,
l'autre corps est prévu pour être fixé et démonté du corps principal (100), et
le dispositif de détection de force agissante (160) détecte, alors que l'autre corps est fixé sur le corps principal (100), la force qui agit sur le corps principal (100) et qui est différente de la charge agissant sur le dispositif de réception de charge (130).

7. Appareil de pesage selon la revendication 6, dans lequel l'autre corps est un terminal d'informations portatif (200).

8. Appareil de pesage selon la revendication 1, comprenant un terminal d'informations portatif (200),
le terminal d'informations portatif (200) comprenant le dispositif de détection de force agissante (160),
l'unité d'acquisition de sortie de charge (111) étant montée sur le corps principal de l'appareil de pesage (100),
l'unité d'acquisition de sortie de force (112) étant montée sur le terminal d'informations portatif (200), et
l'unité de calcul de coefficient de correction (216) étant montée sur le corps principal de l'appareil de pesage sur le terminal d'informations portatif (200).

9. Appareil de pesage selon la revendication 8, dans lequel
l'appareil est agencé de sorte à ce que le terminal d'informations portatif (200) puisse être monté en étant fixé et démontable sur le corps principal de l'appareil de pesage (100), et
le dispositif de détection de force agissante (160) est agencé pour détecter, alors que le terminal d'informations portatif (200) est fixé sur le corps principal de l'appareil de pesage (100), la force qui agit sur le corps principal de l'appareil de pesage (100) et qui diffère de la charge agissant sur l'unité de réception de charge (130).

10. Appareil de pesage selon la revendication 8 ou la revendication 9, dans lequel
le terminal d'informations portatif (200) comprend en outre une unité de transmission de données de force (212) configurée pour transmettre au corps principal de l'appareil de pesage (100) des données de force indiquant une sortie acquise par l'unité d'acquisition de sortie de force (112),

le corps principal de l'appareil de pesage (100) comprend en outre une unité de réception de données de force (124) configurée pour recevoir les données de force transmises par le terminal d'informations portatif (200), et

l'unité de calcul de coefficient de correction (216) est montée sur le corps principal de l'appareil de pesage.

11. Appareil de pesage selon la revendication 8 ou la revendication 9, dans lequel

le corps principal de l'appareil de pesage (100) comprend en outre une unité de transmission de données de charge (126) qui transmet au terminal d'informations portatif (200) des données de charge indiquant la sortie acquise par l'unité d'acquisition de sortie de charge (111),

le terminal d'informations portatif (200) comprend en outre une unité de réception de données de charge (215) qui reçoit les données de charge transmises par le corps principal de l'appareil de pesage (100), et

l'unité de calcul de coefficient de correction (216) est montée sur le terminal d'informations portatif (200).

12. Procédé de pesage permettant de peser la masse d'un objet, le procédé comprenant :

(a) l'acquisition de la sortie d'un dispositif de détection de charge (140) qui est monté sur le corps d'un appareil de pesage (100) afin de détecter une charge agissant sur un dispositif de réception de charge (130) du corps,

(b) l'acquisition de la sortie d'un dispositif de détection de force agissante (160) qui est prévu pour détecter la force qui agit sur le corps et qui est différente de la charge qui agit sur le dispositif de réception de charge (130),

**caractérisé en ce que**
le procédé comprend en outre :

(c) le calcul de la valeur de changement de la sortie du dispositif de détection de charge (140), en tant que coefficient de correction permettant de corriger la sortie du dispositif de détection de charge (140), par rapport à une valeur de changement de la sortie du dispositif de détection de force agissante (160), sur la base de premières sorties du dispositif de détection de charge (140) et du dispositif de détection de force agissante (160), et de secondes sorties du dispositif de détection de charge (140) et du dispositif de détection de force agissante (160),

les premières sorties étant acquises respectivement lors de l'étape (a) et de l'étape (b) lorsque le corps sans charge appliquée de l'objet est placé dans une première attitude,

les secondes sorties étant acquises respectivement lors de l'étape (a) et de l'étape (b) lorsque le corps sans charge appliquée de l'objet est placé dans une seconde attitude,

la première et la seconde attitude étant différentes l'une de l'autre, et

les premières sorties et les secondes sorties étant acquises dans différents séquencements.

13. Procédé de pesage selon la revendication 12, dans lequel

la sortie du dispositif de détection de charge (140) est acquise au moyen d'un appareil de pesage (100),

la sortie du dispositif de détection de force agissante (160) est acquise au moyen d'un terminal d'informations portatif (200) qui est monté en pouvant être fixé et démonté sur le corps de l'appareil de pesage (100) et qui est doté du dispositif de détection de force agissante (160),

le procédé comprenant en outre :

(d) la transmission à l'appareil de pesage (100) de données de force représentant la sortie du dispositif de détection de force agissante (160) acquises lors de l'étape (b), au moyen du terminal d'informations portatif (200), et

(e) la réception des données de force transmises par le terminal d'informations portatif (200), au moyen de l'appareil de pesage (100), et

lors de l'étape (c), au moyen de l'appareil de pesage (100), en tant que coefficient de correction, la valeur de changement de la sortie du dispositif de détection de charge (140) est calculée par rapport à la valeur de changement de la sortie du dispositif de détection de force agissante (160) sur la base de (i) la sortie du dispositif de détection de charge (140) qui est acquise lors de l'étape (a) et la sortie du dispositif de détection de force agissante (160) qui est représentée par les données de force reçues lors de l'étape (d), lorsque le terminal d'informations portatif (200) est fixé sur le corps avec une charge nulle appliquée sur celui-ci et que le corps est placé dans une première attitude, et (ii) la sortie du dispositif de détection de charge (140) qui est acquise lors de l'étape (a) et la sortie du dispositif de détection de force agissante (160) qui est représentée par les données de force reçues lors de l'étape (d) lorsque le terminal d'informations portatif (200) est fixé sur le corps avec une charge nulle appliquée sur celui-ci et que le corps est placé dans une seconde attitude, différente de la première attitude.

14. Procédé de pesage selon la revendication 12., dans lequel

la sortie du dispositif de détection de charge (140) est acquise au moyen de l'appareil de pesage (100), la sortie du dispositif de détection de force agissante (160) est acquise au moyen d'un terminal d'informations portatif (200) qui est monté en pouvant être fixé et démonté sur le corps de l'appareil de pesage (100) et qui est doté du dispositif de détection de force agissante (160),

le procédé comprenant en outre :

(d) la transmission au terminal d'informations portatif (200) de données de charge au moyen de l'appareil de pesage (100) indiquant la sortie acquise lors de l'étape (a), et

(e) la réception des données de charge transmises depuis l'appareil de pesage (100) au moyen du terminal d'informations portatif (200), et

lors de l'étape (c), au moyen du terminal d'informations portatif (200), en tant que coefficient de correction, la valeur de changement de la sortie du dispositif de détection de charge (140) par rapport à la valeur de changement de la sortie du dispositif de détection de force agissante (160) est calculée sur la base de (i) la sortie du dispositif de détection de charge (140) qui est représentée par les données de charge reçues lors de l'étape (d) et la sortie du dispositif de détection de force agissante (160) qui est acquise lors de l'étape (c), lorsque le terminal d'informations portatif (200) est fixé sur le corps avec une charge nulle appliquée sur celui-ci et que le corps est placé dans une première attitude, et (ii) la sortie du dispositif de détection de charge (140) qui est représentée par les données de charge lors de l'étape (d) et la sortie du dispositif de détection de force agissante (160) qui est acquise lors de l'étape (c), lorsque le terminal d'informations portatif (200) est fixé sur le corps avec une charge nulle appliquée sur celui-ci et que le corps est placé dans une seconde attitude, différente de la première attitude.

15. Programme amenant un ordinateur à fonctionner en tant qu'appareil de pesage (100) qui pèse la masse d'un objet,

le programme amenant l'ordinateur à fonctionner comme :

une unité d'acquisition de sortie de charge (111) qui acquiert la sortie d'un dispositif de détection de charge (140) qui est monté sur le corps de l'appareil de pesage (100) afin de détecter une charge agissant sur un dispositif de réception de charge (130) du corps,

une unité d'acquisition de sortie de force (112) qui acquiert la sortie d'un dispositif de détection de force agissante (160) qui est prévu pour détecter une force qui agit sur le corps et qui est différente de la charge agissant sur le dispositif de réception de charge (130), et

une unité de calcul de coefficient de correction (216) qui calcule, en tant que coefficient de correction destiné à corriger la sortie du dispositif de détection de charge (140), la valeur de modification de la sortie du dispositif de détection de charge (140) par rapport à la valeur de modification de la sortie du dispositif de détection de force agissante (160) sur la base (i) de premières sorties du dispositif de détection de charge (140) et du dispositif de détection de force agissante (160), et (ii) de secondes sorties du dispositif de détection de charge (140) et du dispositif de détection de force agissante (160),

dans lequel les premières sorties sont acquises respectivement par l'unité d'acquisition de sortie de charge (111) et l'unité d'acquisition de sortie de force (112) lorsque le corps principal (100), sans charge appliquée de l'objet, est placé dans une première attitude,

dans lequel les secondes sorties sont acquises respectivement par l'unité d'acquisition de sortie de charge (111) et l'unité d'acquisition de sortie de force (112) lorsque le corps principal (100), sans charge appliquée de l'objet, est placé dans une seconde attitude,

dans lequel la première et la seconde attitude sont différentes l'une de l'autre, et

dans lequel les premières sorties et les secondes sorties sont acquises dans différents séquencements.

# FIG.1

# FIG.2

## FIG.3

ADC170      ADC150      110

112 — FORCE OUTPUT ACQUISITION UNIT

111 — LOAD OUTPUT ACQUISITION UNIT

113 — CORRECTION COEFFICIENT CALCULATION UNIT

115 — FREQUENCY DETERMINATION UNIT

116 — NORMAL TIME WEIGHED VALUE CALCULATION UNIT

114 — CORRECTION COEFFICIENT INFORMATION STORAGE UNIT

117 — CHANGE DETECTED TIME WEIGHED VALUE CALCULATION UNIT

118 — WEIGHED VALUE OUTPUT UNIT

DIGITAL DISPLAY 180

## FIG.4

START

ACQUIRE OUTPUT OF LOAD CELL 140 WHEN PLACED IN FIRST ATTITUDE — S101

ACQUIRE OUTPUT OF ACCELEROMETER 160 WHEN PLACED IN FIRST ATTITUDE — S102

ACQUIRE OUTPUT OF LOAD CELL 140 WHEN PLACED IN SECOND ATTITUDE — S103

ACQUIRE OUTPUT OF ACCELEROMETER 160 WHEN PLACED IN SECOND ATTITUDE — S104

CALCULATE CORRECTION COEFFICIENT — S105

STORE CORRECTION COEFFICIENT INFORMATION — S106

END

# FIG.5

```
                    ┌─────────────┐
                    │    START    │
                    └─────────────┘
                           │
                           ▼
        ┌──────────────────────────────────┐
        │       ACQUIRE OUTPUT OF           │──── S111
        │         LOAD CELL 140             │
        └──────────────────────────────────┘
                           │
                           ▼
        ┌──────────────────────────────────┐
        │       ACQUIRE OUTPUT OF           │──── S112
        │       ACCELEROMETER 160           │
        └──────────────────────────────────┘
                           │
                           ▼                       S113
                    ╱───────────────╲
                  ╱        HAS        ╲      NO
            ╱ CHANGE OCCURRED IN OUTPUT OF ╲──────────────┐
            ╲ ACCELEROMETER 160 AT TIME OF ╱              │
                  ╲     WEIGHING?    ╱                     │
                    ╲───────────────╱                     │
                           │ YES                          │
                           ▼                    S114      │
                    ╱───────────────╲                     │
                  ╱        IS         ╲                    │
          ╱  CHANGE FREQUENCY OF OUTPUT  ╲    NO           │
        ╱ OF ACCELEROMETER 160 AT TIME OF WEIGHING ╲───────┤
          ╲   SMALLER THAN THRESHOLD    ╱                  │
                  ╲      VALUE?     ╱                       │
                    ╲───────────────╱                      │
                           │ YES    S115                   │  S116
                           ▼                               ▼
        ┌──────────────────────────────────┐  ┌──────────────────────────┐
        │    CALCULATE WEIGHED VALUE BY     │  │  CALCULATE WEIGHED VALUE │
        │  MEANS OF WEIGHING METHOD AT TIME │  │     BY MEANS OF NORMAL   │
        │ OF ACCELERATION CHANGE DETECTION  │  │      WEIGHING METHOD     │
        └──────────────────────────────────┘  └──────────────────────────┘
                           │                               │
                           │◄──────────────────────────────┘
                           ▼
        ┌──────────────────────────────────┐
        │       OUTPUT WEIGHING RESULT      │──── S117
        └──────────────────────────────────┘
                           │
                           ▼
                    ┌─────────────┐
                    │     END     │
                    └─────────────┘
```

## FIG.6

ADC170

ADC150

110

| 112 FORCE OUTPUT ACQUISITION UNIT | 119 FORCE INFORMATION STORAGE UNIT | 111 LOAD OUTPUT ACQUISITION UNIT |

113 CORRECTION COEFFICIENT CALCULATION UNIT

120 OUTPUT DIFFERENCE DETERMINATION UNIT

116 NORMAL TIME WEIGHED VALUE CALCULATION UNIT

114 CORRECTION COEFFICIENT INFORMATION STORAGE UNIT

121 OUTPUT DIFFERENCE DETECTED TIME WEIGHED VALUE CALCULATION UNIT

118 WEIGHED VALUE OUTPUT UNIT

DIGITAL DISPLAY 180

## FIG.7

START

ACQUIRE OUTPUT OF ACCELEROMETER 160 AT TIME OF SETTING DISPLAY TO ZERO — S201

STORE ACCELERATION INFORMATION — S202

END

# FIG.8

```
                    ┌─────────────┐
                    │    START    │
                    └──────┬──────┘
                           │
              ┌────────────▼────────────┐
              │    ACQUIRE OUTPUT OF     │      S211
              │      LOAD CELL 140       │
              └────────────┬────────────┘
                           │
              ┌────────────▼────────────┐
              │    ACQUIRE OUTPUT OF     │      S212
              │    ACCELEROMETER 160     │
              └────────────┬────────────┘
                           │
                       S213
                        IS
                OUTPUT DIFFERENCE
        BETWEEN OUTPUT OF ACCELEROMETER            YES
  160 AT TIME OF SETTING DISPLAY AUTOMATICALLY ──────────┐
    TO ZERO AND OUTPUT OF ACCELEROMETER                  │
      160 AT TIME OF WEIGHING WITHIN                      │
          ACCEPTABLE VALUE?                               │
                          │ NO                            │
                     S214 │                          S215 │
  ┌───────────────────────▼──────┐      ┌────────────────▼──────────┐
  │   CALCULATE WEIGHED VALUE BY  │      │  CALCULATE WEIGHED VALUE  │
  │ MEANS OF WEIGHING METHOD AT   │      │    BY MEANS OF NORMAL      │
  │ TIME WHEN OUTPUT DIFFERENCE OF│      │      WEIGHING METHOD       │
  │ ACCELEROMETER 160 WAS PRESENT │      └────────────┬──────────────┘
  └───────────────┬───────────────┘                   │
                  │◄──────────────────────────────────┘
                  │
     ┌────────────▼────────────┐
     │  OUTPUT WEIGHING RESULT  │      S216
     └────────────┬────────────┘
                  │
           ┌──────▼──────┐
           │     END     │
           └─────────────┘
```

37

FIG.9

# FIG.10

```
                    ┌─────────────┐
                    (   START     )
                    └─────────────┘
                           │
                           ▼
        ┌──────────────────────────────────┐
        │ ACQUIRE OUTPUT OF LOAD CELL 140   │ ～ S101
        │ WHEN PLACED IN FIRST ATTITUDE     │
        └──────────────────────────────────┘
                           │
                           ▼
        ┌──────────────────────────────────┐
        │ ACQUIRE OUTPUT OF ACCELEROMETER   │ ～ S102
        │ 160 WHEN PLACED IN FIRST ATTITUDE │
        └──────────────────────────────────┘
                           │
                           ▼
        ┌──────────────────────────────────┐
        │ ACQUIRE OUTPUT OF LOAD CELL 140   │ ～ S103
        │ WHEN PLACED IN SECOND ATTITUDE    │
        └──────────────────────────────────┘
                           │
                           ▼
        ┌──────────────────────────────────┐
        │ ACQUIRE OUTPUT OF ACCELEROMETER   │ ～ S104
        │ 160 WHEN PLACED IN SECOND ATTITUDE│
        └──────────────────────────────────┘
                           │
                           ▼
        ┌──────────────────────────────────┐
        │     CALCULATE CORRECTION          │ ～ S105
        │         COEFFICIENT               │
        └──────────────────────────────────┘
                           │
                           ▼
        ┌──────────────────────────────────┐
        │     STORE NEW CORRECTION          │ ～ S106
        │     COEFFICIENT INFORMATION       │
        └──────────────────────────────────┘
                           │
                           ▼
        ┌──────────────────────────────────┐
        │     CALCULATE SPAN COEFFICIENT    │ ～ S311
        └──────────────────────────────────┘
                           │
                           ▼
        ┌──────────────────────────────────┐
        │        STORE NEW SPAN             │ ～ S312
        │     COEFFICIENT INFORMATION       │
        └──────────────────────────────────┘
                           │
                           ▼
                    ┌─────────────┐
                    (    END      )
                    └─────────────┘
```

## FIG.11

## FIG.12

FIG.13

# FIG.14

# FIG.15

WIRELESS COMMUNICATION SUBSYSTEM 190      ADC150

~110

~124
FORCE DATA
RECEPTION UNIT

~111
LOAD OUTPUT
ACQUISITION
UNIT

113~
CORRECTION
COEFFICIENT
CALCULATION UNIT

~115
FREQUENCY
DETERMINATION
UNIT

~116
NORMAL TIME
WEIGHED VALUE
CALCULATION UNIT

~114
CORRECTION
COEFFICIENT
INFORMATION
STORAGE UNIT

~117
CHANGE DETECTED
TIME WEIGHED VALUE
CALCULATION UNIT

~125
WEIGHED
VALUE DATA
TRANSMISSION
UNIT

# FIG.16

ACCELEROMETER 280      TOUCH SCREEN 360

~211
FORCE OUTPUT
ACQUISITION UNIT

~214
WEIGHED VALUE
OUTPUT UNIT

~210

~212
FORCE DATA
TRANSMISSION UNIT

~213
WEIGHED VALUE DATA
RECEPTION UNIT

WIRELESS COMMUNICATION SUBSYSTEM 310

## FIG.17

SCALE 100                                    SMARTPHONE 200

~S401                                        ~S402

| ACQUIRE OUTPUT OF LOAD CELL 140 WHEN PLACED IN FIRST ATTITUDE | | ACQUIRE OUTPUT OF ACCELEROMETER 280 WHEN PLACED IN FIRST ATTITUDE |

~S403 ; TRANSMIT FIRST FORCE DATA

~S405

| ACQUIRE OUTPUT OF LOAD CELL 140 WHEN PLACED IN SECOND ATTITUDE | ~S404 | ACQUIRE OUTPUT OF ACCELEROMETER 280 WHEN PLACED IN SECOND ATTITUDE |

~S406 ; TRANSMIT SECOND FORCE DATA

| CALCULATE CORRECTION COEFFICIENT | ~S407 |

| STORE CORRECTION COEFFICIENT INFORMATION | ~S408 |

## FIG.18

ADC150

~111

| LOAD OUTPUT ACQUISITION UNIT |

~110

~126

| LOAD DATA TRANSMISSION UNIT |

WIRELESS COMMUNICATION SUBSYSTEM 190

# FIG.19

ACCELEROMETER 280

WIRELESS COMMUNICATION SUBSYSTEM 310

~210

~211
FORCE OUTPUT
ACQUISITION UNIT

~215
LOAD DATA
RECEPTION UNIT

216~
CORRECTION
COEFFICIENT
CALCULATION UNIT

~218
FREQUENCY
DETERMINATION
UNIT

~219
NORMAL TIME
WEIGHED VALUE
CALCULATION UNIT

~217
CORRECTION
COEFFICIENT
INFORMATION
STORAGE UNIT

~220
CHANGE DETECTED
TIME WEIGHED VALUE
CALCULATION UNIT

~214
WEIGHED VALUE
OUTPUT UNIT

TOUCH SCREEN 360

# FIG.20

SCALE 100                                                    SMARTPHONE 200

S501

| ACQUIRE OUTPUT OF LOAD CELL 140 WHEN PLACED IN FIRST ATTITUDE |

S503

| ACQUIRE OUTPUT OF ACCELEROMETER 280 WHEN PLACED IN FIRST ATTITUDE |

S502 ; TRANSMIT FIRST LOAD DATA

S506

| ACQUIRE OUTPUT OF LOAD CELL 140 WHEN PLACED IN SECOND ATTITUDE | S504

| ACQUIRE OUTPUT OF ACCELEROMETER 280 WHEN PLACED IN SECOND ATTITUDE |

S505 ; TRANSMIT SECOND LOAD DATA

S507 | CALCULATE CORRECTION COEFFICIENT |

S508 | STORE CORRECTION COEFFICIENT INFORMATION |

**EP 2 851 660 B1**

**REFERENCES CITED IN THE DESCRIPTION**

**Patent documents cited in the description**

- JP 2013002941 A
- EP 1985977 A1

- DE 202009014292 U1